(19) Europäisches Patentamt
European Patent Office
Office européen des brevets

(11) **EP 3 018 148 B1**

(12) **EUROPÄISCHE PATENTSCHRIFT**

(45) Veröffentlichungstag und Bekanntmachung des Hinweises auf die Patenterteilung:
**28.06.2017 Patentblatt 2017/26**

(21) Anmeldenummer: **14191732.8**

(22) Anmeldetag: **04.11.2014**

(51) Int Cl.:
*C08F 265/06* (2006.01)     *C08F 2/00* (2006.01)
*C08F 2/26* (2006.01)     *C08F 220/10* (2006.01)
*C09D 151/00* (2006.01)

(54) **Verfahren zur Herstellung einer wässrigen Polymerdispersion**

Method for preparing an aqueous polymer dispersion

Procédé de fabrication d'une dispersion polymère aqueuse

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.05.2016 Patentblatt 2016/19**

(73) Patentinhaber: **BASF SE**
**67056 Ludwigshafen am Rhein (DE)**

(72) Erfinder:
• **BALK, Roelof**
**67459 Böhl-Iggelheim (DE)**
• **LOHMEIJER, Bastiaan**
**68163 Mannheim (DE)**

(74) Vertreter: **BASF IP Association**
**BASF SE**
**G-FLP-C006**
**67056 Ludwigshafen (DE)**

(56) Entgegenhaltungen:
**WO-A1-2008/152017     WO-A1-2009/095569**

**Beschreibung**

Die vorliegende Erfindung betrifft ein Verfahren zur Herstellung einer wässrigen Polymerdispersion durch radikalisch initiierte wässrige Emulsionspolymerisation ethylenisch ungesättigter Monomere sowie die nach diesem Verfahren erhältlichen Polymerdispersionen. Die Erfindung betrifft auch die Verwendung der Polymerdispersionen, insbesondere zur Herstellung von Beschichtungsmitteln für Holz.

Hintergrund der Erfindung

Wässrige, durch radikalisch initiierte wässrige Emulsionspolymerisation hergestellte Polymerdispersion, im Folgenden auch als Emulsionspolymerisate bezeichnet, finden vielfältige Anwendung zur Herstellung von Beschichtungsmitteln, Klebstoffen und als Bindemittel für Fasern und Textilien.

Bei Verwendung wässriger Polymerdispersionen zur Herstellung von wässrigen Beschichtungsmitteln wie Dispersionsfarben und Lasuren sind oft Eigenschaften erwünscht, die nur durch gegenläufige Maßnahmen erreicht werden können. Einerseits sollen die Polymerdispersionen eine gute Filmbildung bei niedrigen Temperaturen auch bei geringen Anteilen an Filmbildehilfsmitteln gewährleisten, was üblicherweise eine niedrige Glasübergangstemperatur des Polymerisats erfordert. Gleichzeitig wird eine hohe Härte und Kratzfestigkeit des trockenen Films gefordert, was üblicherweise nur durch vergleichsweise harte Polymere mit entsprechend hoher Glasübergangstemperatur gewährleistet wird, die ohne Filmbildehilfsmittel nicht oder nur schlecht verfilmen.

Verschiedentlich wurden mehrstufige Polymerlatices, d.h. Polymerdispersionen von Polymerpartikeln aus mehreren Polymerphasen mit verschiedenen Glasübergangstemperaturen, für die Herstellung von Holzbeschichtungen vorgeschlagen - siehe z.B. EP 184091, EP 623659 A1, EP 710680 A1 oder EP 795568 A2. Die Herstellung der mehrstufigen Polymerlatices erfolgt in der Regel durch eine mehrstufige Emulsionspolymerisation, bei der die Monomere, welche die jeweilige Polymerphase bilden, sequentiell, d.h. in aufeinanderfolgenden Polymerisationsstufen, polymerisiert werden. im Folgenden mehrstufige Polymerlatices daher auch als mehrstufige Emulsionspolymerisate bezeichnet. Die in den genannten Schriften beschriebenen, mehrstufigen Emulsionspolymerisate eignen für pigmentierte Holzfarben und Lasuren zeichnen durch gute Blockfestigkeit und teilweise auch durch eine sehr niedrige Wasserempfindlichkeit aus.

Auch wenn die vorgenannten mehrstufigen Emulsionspolymerisate als Bindemittel in Beschichtungssystemen für Holz und holzähnliche Substrate eingesetzt werden können, ergeben sich trotzdem gewisse Nachteile, insbesondere wenn sie in pigmentierten oder abgetönten Holzfarben formuliert werden. So sind die vorgenannten mehrstufigen Emulsionspolymerisate mit verschiedenen, häufig in solchen Farbformulierungen eingesetzten Pigmenttypen unverträglich, was sich in der Bildung von Koagulat und Filterrückständen bei der Herstellung der Formulierung sowie durch eine unzureichende Farbtonstabilität bei der Auftragung der Beschichtung auf das Substrat äußert. Darüber hinaus lässt sich das Viskositätsverhalten der Formulierung, das für einen ordnungsgemäßen Auftrag der Farbe auf das Substrat wichtig ist, oftmals nur schwer einstellen.

Die WO 2008/152017 beschreibt die Herstellung wässriger, mehrstufiger Emulsionspolymerisate, bei dem man zunächst ein Emulsionspolymerisat herstellt, das ausschließlich aus Monomeren mit begrenzter Wasserlöslichkeit aufgebaut ist, und anschließend zwei Monomerzusammensetzungen sukzessive aufpolymerisiert. Das Verfahren erlaubt es, in gezielter Weise die Teilchengröße des Polymerisats einzustellen und liefert Emulsionspolymerisate mit guten mechanischen Eigenschaften wie Blockfestigkeit, die sich in pigmenthaltigen Farbformulierungen durch eine gute Farbrillanz und Farbtiefe auszeichnen. Die Farbtonstabilität ist jedoch teilweise unzureichend. Außerdem kommt es beim Aufbringen der Farbe zu Verlaufsstörungen, die zu einem nur mäßigen Glanz des trockenen Farbfilms führen, was insbesondere bei Klarlacken problematisch ist.

Die WO 2009/095569 beschreibt mehrstufige Emulsionspolymerisate, die durch radikalische Emulsionspolymerisation in Gegenwart von Phosphat-Emulgatoren hergestellt werden. Die Farbtonstabilität ist jedoch ebenfalls nur unzureichend und es kommt ebenfalls zu Verlaufsstörungen beim Aufbringen der Farbe.

Zusammenfassung der Erfindung

Aufgabe der vorliegenden Erfindung ist die Bereitstellung von Emulsionspolymerisaten, welche die im Stand der Technik auftretenden Probleme nicht oder nur in geringem Maße aufweisen. Insbesondere sollten die Emulsionspolymerisate in Klarlacken und pigmenthaltigen Beschichtungsmitteln, insbesondere bei der Anwendung auf Holz, eine gute Farbtonstabilität und einen hohen Glanz gewährleisten. Zudem sollten die Emulsionspolymerisate auch bei niedrigen Temperaturen und ohne den Einsatz von Lösungs- und Filmbildehilfsmitteln zu Beschichtungen mit hoher Blockfestigkeit und guter Pendelhärte bei gleichzeitiger Elastizität und guter Wasserresistenz führen. Gleichzeitig sollten die Emulsionspolymerisate in Farbformulierungen eine reproduzierbare Einstellung der Rheologie erlauben. Insbesondere sollen die Viskosität der Farben unempfindlich gegenüber Konzentrationsschwankungen des Verdickers in der Farbe sein.

Es wurde überraschenderweise gefunden, dass diese und weitere Aufgaben durch die nach dem im Folgenden näher definierten Verfahren einer radikalischen wässrigen, mehrstufigen Emulsionspolymerisation erhältlichen, wässrigen Polymerdispersionen, gelöst werden, bei dem man die erste Polymerisationsstufe in Gegenwart eines aus wasserunlöslichen Monomeren aufgebauten Emulsionspolymerisats, wenigstens Dispergiermittel D1a, das wenigstens eine Sulfat- oder Sulfonatgruppe aufweist, und gegebenenfalls wenigstens ein zweites Dispergiermittel D1b, das wenigstens eine Phosphat- oder Phosphonatgruppe aufweist, durchführt und in der zweiten Polymerisationsstufe wenigstens ein Dispergiermittel D2b einsetzt das wenigstens eine Phosphat- oder Phosphonatgruppe aufweist, wobei das Gewichtsverhältnis des in der ersten Stufe eingesetzten Dispergiermittels D1b zu dem in der zweiten Polymerisationsstufe eingesetzten Dispergiermittels D2b < 1 ist und insbesondere im Bereich von 1 : 1,01 bis 1 : 5,00, und speziell im Bereich von 1 : 1,05 bis 1 : 4,00 liegt.

Dementsprechend betrifft ein erster Gegenstand der Erfindung ein Verfahren zur Herstellung einer wässrigen Polymerdispersion durch radikalisch initiierte wässrige Emulsionspolymerisation von ethylenisch ungesättigten Monomeren in Anwesenheit wenigstens eines Dispergiermittels und wenigstens eines Polymerisationsinitiators, umfassend die folgenden Schritte:

i) Bereitstellung einer wässrigen Polymerdispersion S, die im Wesentlichen aus gering wasserlöslichen, neutralen monoethylenisch ungesättigten Monomeren M0 mit einer Wasserlöslichkeit von weniger als 100 g/l bei 20°C und 1 bar aufgebaut ist;

ii) radikalische Emulsionspolymerisation einer Monomerzusammensetzung M1 in Gegenwart einer Dispergiermittelzusammensetzung D1 und der wässrigen Polymerdispersion S, wobei die Monomerzusammensetzung M1 umfasst:

- 90 bis 99,9 Gew.-%, bezogen auf die Gesamtmenge an Monomeren der Monomerzusammensetzung M1, wenigstens eines neutralen monoethylenisch ungesättigten Monomers MA1 mit einer Wasserlöslichkeit von weniger als 100 g/l bei 20°C und 1 bar; und
- 0,1 bis 10 Gew.-%, bezogen auf die Gesamtmenge an Monomeren der Monomerzusammensetzung M1, wenigstens eines anionischen oder neutralen monoethylenisch ungesättigten Monomers MB1 mit einer Wasserlöslichkeit von wenigstens 200 g/l bei 20°C und 1 bar;

und anschließende

iii) radikalische Emulsionspolymerisation einer Monomerzusammensetzung M2 in Gegenwart einer Dispergiermittelzusammensetzung D2 in der in Schritt ii) erhaltenen wässrigen Polymerdispersion, wobei die Monomerzusammensetzung M2 umfasst:

- 90 bis 99,9 Gew.-%, bezogen auf die Gesamtmenge an Monomeren der Monomerzusammensetzung M2, wenigstens eines neutralen monoethylenisch ungesättigten Monomers MA2 mit einer Wasserlöslichkeit von weniger als 100 g/l bei 20°C und 1 bar; und
- 0,1 bis 10 Gew.-%, bezogen auf die Gesamtmenge an Monomeren der Monomerzusammensetzung M2, wenigstens eines anionischen oder neutralen monoethylenisch ungesättigten Monomers MB2 mit einer Wasserlöslichkeit von wenigstens 200 g/l bei 20°C und 1 bar;

mit den folgenden Maßgaben:

- die Dispergiermittelzusammensetzung D1 umfasst wenigstens ein erstes anionisches Dispergiermittel D1a, das wenigstens eine Sulfat- oder Sulfonatgruppe aufweist, und gegebenenfalls wenigstens ein zweites Dispergiermittel D1b umfasst, das wenigstens eine Phosphat- oder Phosphonatgruppe aufweist;
- die Dispergiermittelzusammensetzung D2 umfasst wenigstens ein Dispergiermittel D2b, das wenigstens eine Phosphat- oder Phosphonatgruppe aufweist, und
- das Gewichtsverhältnis der in Stufe 1 eingesetzten Menge an Dispergiermittel D1b zu der in Stufe 2 eingesetzten Menge des Dispergiermittels D2b, d.h. das Mengenverhältnis D1b/D2b, ist kleiner als 1 und liegt insbesondere im Bereich von 1 : 1,01 bis 1 : 5,00, und speziell im Bereich von 1 : 1,05 bis 1 : 4,00.

Die vorliegende Erfindung betrifft dementsprechend auch wässrige Polymerdispersionen, die durch das hier und im Folgenden beschriebene Verfahren erhältlich sind, sowie die durch Trocknen, insbesondere durch Sprüh- oder Gefriertrocknung derartiger wässriger Polymerdispersionen erhältlichen Polymerpulver.

Die vorliegende Erfindung betrifft weiterhin die Verwendung der hier und im Folgenden beschriebenen wässrigen Polymerdispersionen zur Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln. Die vorliegende Erfindung betrifft insbesondere die Verwendung der hier und im Folgenden beschriebenen wässrigen Polymerdispersionen zur Herstellung von Beschichtungsmitteln für Holz.

Die vorliegende Erfindung betrifft außerdem die Verwendung der hier und im Folgenden beschriebenen Polymerpulver zur Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln.

Ausführliche Beschreibung der Erfindung:

Hier und im Folgenden geben die im Zusammenhang mit Verbindungen oder Molekülteilen verwendeten Präfixe $C_n$-$C_m$ jeweils einen Bereich für die Anzahl möglicher Kohlenstoffatome an, die ein Molekülteil oder eine Verbindung aufweisen kann.

Das erfindungsgemäße Verfahren umfasst einen ersten Schritt, bei dem eine wässrige Polymerdispersion S bereitgestellt wird. Das Polymer der Polymerdispersion S ist dabei im Wesentlichen aus gering wasserlöslichen, neutralen monoethylenisch ungesättigten Monomeren M0 mit einer Wasserlöslichkeit von weniger als 100 g/l, insbesondere nicht mehr als 60 g/l und speziell nicht mehr als 30 g/l, z.B. mit einer Wasserlöslichkeit im Bereich von 0,1 bis 60 g/l und speziell im Bereich von 0,1 bis 30 g/l bei 20°C und 1 bar aufgebaut. Die Monomere M0 machen in der Regel wenigstens 99 Gew.-%, insbesondere wenigstens 99,9 Gew.-% und speziell 100 Gew.-% der das Polymer konstituierenden Monomere aus. Neben den Monomeren M0 kann das Polymerisat der Polymerdispersion S auch davon verschiedene, ein oder mehrfach ethylenisch ungesättigte Monomere einpolymerisiert enthalten. Beispiele hierfür sind die im Folgenden näher erläuterten Monomere M1b und M2b.

Beispiele für Monomere M0 sind

- Ester der Acryl- und/oder Methacrylsäure mit 1 bis 12 C-Atome aufweisenden Alkanolen Methylacrylat, Methylmethacrylat, Ethylacrylat, Ethylmethacrylat, n-Butylacrylat, n-Butylmethacrylat, tert.-Butylacrylat, tert-Butylmethacrylat n-Hexylacrylat, Octylacrylat, 2-Ethylhexylacrylat und 2-Propylheptylacrylat;
- vinylaromatische Kohlenwasserstoffe wie Styrol;
- Vinylester gesättigter $C_2$-$C_{12}$-Monocarbonsäuren wie Vinylacetat, Vinylpropionat, Vinylhexanoat, Vinyloctanoat und Vinylester der Versaticsäuren,

und deren Mischungen.

Bevorzugte Monomere M0 sind

- Ester der Acryl- und/oder Methacrylsäure mit 1 bis 12 C-Atome aufweisenden Alkanolen wie Methylacrylat, Methylmethacrylat, Ethylacrylat, Ethylmethacrylat, n-Butylacrylat, n-Butylmethacrylat, tert.-Butylacrylat, tert-Butylmethacrylat n-Hexylacrylat, Octylacrylat, 2-Ethylhexylacrylat und 2-Propylheptylacrylat; sowie
- vinylaromatische Kohlenwasserstoffe wie Styrol;

und deren Mischungen.

Besonders bevorzugte Monomere M0 sind

- Ester der Acryl- und/oder Methacrylsäure mit 1 bis 4 C-Atome aufweisenden Alkanolen wie Methylacrylat, Methylmethacrylat, Ethylacrylat, Ethylmethacrylat, n-Butylacrylat, n-Butylmethacrylat, tert.-Butylacrylat und tert-Butylmethacrylat, und deren Mischungen.

Neben den Monomeren M0 kann das Polymerisat der Polymerdispersion S auch davon verschiedene, ein oder mehrfach ethylenisch ungesättigte Monomere M0* einpolymerisiert enthalten. Beispiele für Monomere M0* sind die im Folgenden näher erläuterten Monomere MB1 und MB2 sowie die Monomere M3. Vorzugsweise beträgt der Anteil der Monomere M0*, bezogen auf die Gesamtmenge der Monomere M0 + M0* nicht mehr als 1 Gew.-% insbesondere nicht mehr als 0,1 Gew.-%.

In der Regel werden solche Polymerdispersionen S eingesetzt, deren Polymere eine Glasübergangstemperatur $T_g$ im Bereich von 0 bis 150 °C, im Bereich von 50 bis 120 °C aufweisen. Die Glasübergangstemperatur wird nach dem DSC-Verfahren (Differential Scanning Calorimetry, 20 K/min, midpoint-Messung) nach DIN 53765:1994-03 oder ISO 11357-2 durchgeführt, wobei die Probenvorbereitung vorzugsweise nach DIN EN ISO 16805:2005 erfolgt.

Nach Fox (T. G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/Tg = x_1/Tg_1 + x_2/Tg_2 + .... x_n/Tg_n,$$

wobei $x_1$, $x_2$, .... $x_n$ die Massenbrüche der Monomeren 1, 2, .... n und $Tg_1$, $Tg_2$, .... $Tg_n$ die Glasübergangstemperaturen der jeweils nur aus einem der Monomeren 1, 2, .... n aufgebauten Polymerisaten in Grad Kelvin bedeuten. Die Tg-Werte für die Homopolymerisate der meisten Monomeren sind bekannt und z. B. in Ullmann's Encyclopedia of Industrial Chemistry, 5. Aufl., Vol. A21, Seite 169, Verlag Chemie, Weinheim, 1992, aufgeführt; weitere Quellen für Glasübergangstemperaturen von Homopolymerisaten bilden z. B. J. Brandrup, E. H. Immergut, Polymer Handbook, 1st Ed., J. Wiley, New York, 1966; 2nd Ed. J. Wiley, New York, 1975 und 3rd Ed. J. Wiley, New York, 1989.

In den wässrigen Polymerdispersionen S liegen die dispergierten Polymere in Form von Polymerpartikeln vor. Die Polymerpartikel haben typischerweise einen gewichtsmittleren Durchmesser $D_w$ im Bereich von 10 bis 200 nm und insbesondere im Bereich von 20 bis 100 nm auf. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Vorzugsweise weisen die Polymere der Polymerdispersion S eine enge Teilchengrößenverteilung auf. Insbesondere wird das Verhältnis von gewichtsmittlerem Teilchendurchmesser $D_{w50}$ zu zahlenmittlerem Teilchendurchmesser $D_{N50}$, d.h. der Quotient $D_{w50}/D_{N50}$ einen Wert von 2,0, bevorzugt 1,5 und insbesondere 1,2 oder 1,1 nicht überschreiten wobei sowohl $D_{w50}$ wie auch $D_{N50}$ jeweils der nach der Methode der Analytischen Ultrazentrifuge bestimmt werden.

Die wässrige Polymerdispersion S enthält in der Regel eine oder mehrere Dispergiermittel zur Stabilisierung der Polymerpartikel. Hierzu zählen vor allem die im Folgenden im Zusammenhang mit den Dispergiermittelzusammensetzungen D1 bzw. D2 angegebenen anionischen und nichtionischen Dispergiermittel D1a, D1b und D1c, insbesondere die anionischen Emulgatoren D1a, welche Sulfonsäure- und/oder Sulfonat-Gruppen aufweisen, speziell deren Alkalimetallsalze. Der Gehalt an Dispergiermitteln in der Polymerdispersion S liegt typischerweise im Bereich von 1 bis 10 Gew.-%, bezogen auf die Gesamtmenge des in der Polymerdispersion enthaltenen dispergierten Polymers bzw. auf die Gesamtmenge der Monomere M0 und ggf. M0*.

Die wässrige Polymerispersion S wird typischerweise in einer solchen Menge eingesetzt, dass der Gewichtsanteil der Monomere M0, bezogen auf die Gesamtmasse der Monomere M0 und der Monomere der Monomerzusammensetzungen M1 und M2 im Bereich von 0,1 bis 10 Gew.-% und insbesondere im Bereich von 0,5 bis 5 Gew.-% liegt.

Bei den Polymerdispersionen S handelt es sich typischerweise um wässrige Emulsionspolymerisate, d.h. um wässrige Dispersionen von Polymeren, die durch eine radikalisch initiierte wässrige Emulsionspolymerisation der Monomere M0 und ggf. M0* in Anwesenheit wenigstens eines Dispergiermittels, beispielsweise in Gegenwart wenigstens eines anionischen und/oder nichtionischen Emulgators hergestellt werden. Die zur Herstellung erforderlichen Polymerisationsbedinungen wie Druck und Temperatur sind dem Fachmann geläufig und entsprechen im Wesentlichen den für die Schritte ii) und iii) angegebenen Bedingungen. Gleiches gilt für die verwendeten Polymerisationsinitiatoren. Vorzugsweise geht man dabei so vor, dass man wenigstens eine Teilmenge oder die Gesamtmenge des in der Polymerdispersion S enthaltenen Dispergiermittels vorlegt und anschließend die Monomere M0 und ggf. M0* nach der Methode einer radikalischen wässrigen Emulsionspolymerisation polymerisiert.

Die Herstellung der Polymerdispersion S kann in einem separaten Schritt erfolgen. Bevorzugt wird man jedoch so vorgehen, dass man in Schritt i) die Polymerdispersion S durch radikalisch initiierte wässrige Emulsionspolymerisation der ethylenisch ungesättigten Monomere M0 und ggf. M0* in Anwesenheit wenigstens eines Dispergiermittels, beispielsweise in Gegenwart wenigstens eines anionischen und/oder nichtionischen Emulgators, insbesondere in Gegenwart wenigstens eines anionischen Emulgators, welcher Sulfonsäure- und/oder Sulfonat-Gruppen aufweist, und wenigstens eines Polymerisationsinitiators herstellt und anschließend die Schritte ii) und iii) in der so hergestellten Polymerdispersion S durchführt.

In Schritt ii) des erfindungsgemäßen Verfahrens erfolgt die radikalische Emulsionspolymerisation der Monomerzusammensetzung M1, die 90 bis 99,9, insbesondere 95 bis 99,9 Gew.-% und speziell 97 bis 99,9 gew.-% Monomere MA1 und 0,1 bis 10 Gew.-%, insbesondere 0,1 bis 5 Gew.-% und speziell 0,1 bis 3 Gew.-% Monomere MB1 umfasst, wobei die Mengenangaben der Monomere M1 a und M1 b jeweils auf das Gesamtgewicht der in der Monomerzusammensetzung M1 enthaltenen Monomere bezogen sind.

Die Monomere MA1 weisen eine polymerisierbare, ethylenisch ungesättigte Doppelbindung auf und besitzen eine Wasserlöslichkeit von weniger als 100 g/l, insbesondere nicht mehr als 60 g/l und speziell nicht mehr als 30 g/l, z.B. eine Wasserlöslichkeit im Bereich von 0,1 bis 60 g/l und speziell im Bereich von 0,1 bis 30 g/l bei 20°C und 1 bar.

Beispiele für Monomere MA1 sind

- Ester monoethylenisch ungesättigter $C_3$-$C_8$-Monocarbonsäuren mit $C_1$-$C_{30}$-Alkanolen, insbesondere Ester der Acrylsäure und/oder der Methacrylsäure mit 1 bis 12 C-Atome aufweisenden Alkanolen wie Methylacrylat, Methylmethacrylat, Ethylacrylat, Ethylmethacrylat, n-Butylacrylat, n-Butylmethacrylat, tert.-Butylacrylat, tert-Butylmethacrylat n-Hexylacrylat, Octylacrylat, 2-Ethylhexylacrylat und 2-Propylheptylacrylat;
- Ester monoethylenisch ungesättigter $C_4$-$C_8$-Dicarbonsäuren mit $C_1$-$C_{30}$-Alkanolen, wie die Diester der maleinsäure und der Fumarsäure;
- vinylaromatische Kohlenwasserstoffe wie Styrol;
- Butadien;
- Olefine und Halogenolefine wie Ethylen, Propen, Vinylchlorid und Vinylidenchlorid;
- Vinylester und Allylester gesättigter $C_1$-$C_{30}$-Monocarbonsäuren, insbesondere gesättigter $C_1$-$C_{30}$-Monocarbonsäuren wie Vinylacetat, Vinylpropionat, Vinylhexanoat, Vinyloctanoat und Vinylester der Versaticsäuren,

und deren Mischungen.

Bevorzugte Monomere MA1 sind

- Ester der Acryl- und/oder Methacrylsäure mit 1 bis 12 C-Atome aufweisenden Alkanolen wie Methylacrylat, Methylmethacrylat, Ethylacrylat, Ethylmethacrylat, n-Butylacrylat, n-Butylmethacrylat, tert.-Butylacrylat, tert-Butylmethacrylat n-Hexylacrylat, Octylacrylat, 2-Ethylhexylacrylat und 2-Propylheptylacrylat; sowie
- vinylaromatische Kohlenwasserstoffe wie Styrol;

und deren Mischungen.

Besonders bevorzugte Monomere MA1 sind

- Ester der Acrylsäure mit 1 bis 12 C-Atomen aufweisenden Alkanolen und Ester der Methacrylsäure mit 1 bis 4 C-Atome aufweisenden Alkanolen wie Methylacrylat, Methylmethacrylat, Ethylacrylat, Ethylmethacrylat, n-Butylacrylat, n-Butylmethacrylat, tert.-Butylacrylat und tert-Butylmethacrylat, und deren Mischungen, insbesondere Mischungen wenigstens eines Esters der Acrylsäure mit 1 bis 12 C-Atomen aufweisenden Alkanolen mit wenigstens einem Ester der Methacrylsäure mit 1 bis 4 C-Atome aufweisenden Alkanolen.

Die Monomere MB1 weisen eine polymerisierbare, ethylenisch ungesättigte Doppelbindung auf und besitzen eine Wasserlöslichkeit von wenigstens 200 g/l oder sind vollständig mit Wasser mischbar Beispiele für Monomere MB1 sind

- monoethylenisch ungesättigte Monocarbonsäuren mit 3 bis 8 C-Atomen wie Acrylsäure und Methacrylsäure;
- monoethylenisch ungesättigte Dicarbonsäuren mit 4 bis 8 C-Atomen wie Maleinsäure, Itaconsäure und Citraconsäure;
- primäre Amide monoethylenisch ungesättigter Monocarbonsäuren mit 3 bis 8 C-Atomen wie Acrylamid und Methacrylamid;
- Harnstoff- oder Ketogruppen tragende, monoethylenisch ungesättigte Monomere wie (Meth)acrylsäure-[2-(2-oxo-imidazolidin-1-yl)-ethylester, 2-Ureido(meth)acrylat, N-[2-(2-oxo-oxazolidin-3-yl)-ethyl]-methacrylat, Acetoacetoxyethylacrylat, Acetoacetoxypropylmethacrylat, Acetoacetoxybutylmethacrylat, 2-(Acetoacetoxy)ethylmethacrylat, Diacetonacrylamid (DAAM) und Diacetonmethacrylamid;
- Monoethylenisch ungesättigte Sulfonsäuren und deren Salze wie Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren und 2-Acrylamido-2-methylpropansulfonsäure, insbesondere deren Salze, speziell deren Natriumsalze;
- Monoethylenisch ungesättigte Monomere mit einer Phophat oder PhosphonatGruppe und deren Salze wie Vinylphosphonsäure, Allylphosphonsäure, 2-Phophonoethylacrylat, 2-Phophonoethylmethacrylat, Phosphonopropylacrylat, Phosphonoopropylmethacrylat, Styrolphosphonsäuren, 2-Acrylamido-2-methylpropanphosphonsäure, sowie phosphorsäurehalbester der nachfolgend genannten Hydroxy-$C_2$-$C_4$-alkylester monoethylenisch ungesättigter $C_3$-$C_8$-Monocarbonsäuren, z.B. die Phosphorsäurehalbester von 2-Hydroxyethyl(meth)acrylat, 3-Hy-droxypropyl(meth)acrylat, 4-Hydroxybutyl(meth)acrylat, sowie insbesondere die Salze der vorgenannten onoethylenisch ungesättigte Monomere mit einer Phophat oder PhosphonatGruppe, speziell deren Natriumsalze;
- Hydroxy-$C_2$-$C_4$-alkylester monoethylenisch ungesättigter $C_3$-$C_8$-Monocarbonsäuren, insbesondere Hydroxy-$C_2$-$C_4$-alkylester der Acrylsäure oder der Methacrylsäure, im Folgenden auch als Hydroxyalkyl(meth)acrylate bezeichnet, insbesondere 2-Hydroxyethyl(meth)acrylat, 3-Hy-droxypropyl(meth)acrylat, 4-Hydroxybutyl(meth)acrylat, etc.;

und deren Mischungen.

Bevorzugte Monomere MB1 sind

- monoethylenisch ungesättigte Monocarbonsäuren mit 3 bis 8 C-Atomen wie Acrylsäure und Methacrylsäure;
- primäre Amide monoethylenisch ungesättigter Monocarbonsäuren mit 3 bis 8 C-Atomen wie Acrylamid und Methacrylamid;
- Harnstoff- oder Ketogruppen tragende, monoethylenisch ungesättigte Monomere wie (Meth)acrylsäure-[2-(2-oxo-imidazolidin-1-yl)-ethylester, 2-Ureido(meth)acrylat, N-[2-(2-oxo-oxazolidin-3-yl)-ethyl]-methacrylat, Acetoacetoxyethylacrylat, Acetoacetoxypropylmethacrylat, Acetoacetoxybutylmethacrylat, 2-(Acetoacetoxy)ethylmethacrylat, Diacetonacrylamid (DAAM) und Diacetonmethacrylamid;

und deren Mischungen.

Die Monomere M1 werden vorzugsweise so ausgewählt, dass die theoretische Glasübergangstemperatur des resultierenden Polymeren nach Fox, im Folgenden $T_g(1)$ einen Wert von 30°C insbesondere 20°C nicht überschreitet und beispielsweise im Bereich von -40°C bis +30°C und insbesondere im Bereich von -20°C bis +20°C liegt.

Die Menge der in der Polymerisationsstufe ii) eingesetzten Monomere M1 liegt in der Regel im Bereich von 50 bis 98,9 Gew.-%, vorzugsweise im Bereich von 60 bis 95 Gew.-%, insbesondere im Bereich von 70 bis 90 Gew.-%, bezogen auf die Gesamtmasse der Monomeren M0 und der Monomeren der Monomerzusammensetzungen M1 und M2.

Die Polymerisation der Monomerzusammensetzung M1 erfolgt in Gegenwart einer Dispergiermittelzusammensetzung D1. Diese umfasst wenigstens ein erstes Dispergiermittel D1a, das wenigstens eine Sulfat- oder Sulfonatgruppe aufweist.

Bei dem Dispergiermittel D1a kann es sich um Sulfat- oder Sulfonatgruppen aufweisende Schutzkolloide oder vorzugsweise um Sulfat- oder Sulfonatgruppen aufweisende Emulgatoren handeln. Unter Schutzkolloiden versteht man, im Unterschied zu Emulgatoren, Verbindungen mit Molekulargewichten oberhalb 2000 Dalton, wohingegen Emulgatoren typischerweise niedrigere Molekulargewichte aufweisen. Die Sulfat- oder Sulfonatgruppen aufweisenden Dispergiermittel D1a werden typischerweise in Form ihrer Alkalisalze, insbesondere ihrer Natriumsalze oder in Form ihrer Ammoniumsalze eingesetzt.

Geeignete Dispergiermittel D1a sind beispielsweise die Salze, insbesondere die Alkali-und Ammoniumsalze von Alkylsulfaten, insbesondere von $C_8$-$C_{22}$-Alkylsulfaten, von Schwefelsäurehalbestern ethoxylierter Alkanole, insbesondere von Schwefelsäurehalbestern ethoxylierter $C_8$-$C_{22}$-Alkanole, vorzugsweise mit einem Ethoxylierungsgrad (EO-Grad) im Bereich von 2 bis 40, von Schwefelsäurehalbestern ethoxylierter Alkylphenole, insbesondere von Schwefelsäurehalbestern ethoxylierter $C_4$-$C_{18}$-Alkylphenole (EO-Grad vorzugsweise 3 bis 40), von Alkylsulfonsäuren, insbesondere von $C_8$-$C_{22}$-Alkylsulfonsäuren, von Dialkylestern, insbesondere Di-$C_4$-$C_{18}$-alkylestern der Sulfonbernsteinsäure, von Alkylbenzolsulfonsäuren, insbesondere von $C_4$-$C_{22}$-Alkylbenzolsulfonsäuren, sowie von ein- oder zweifach sulfonierten, alkylsubstituierten Diphenylethern, z.B. von Bis(phenylsulfonsäure)ethern, die an einem oder beiden aromatischen Ringen eine $C_4$-$C_{24}$-Alkylgruppe tragen. Letztere sind allgemein bekannt, z. B. aus der US-A-4,269,749, und im Handel erhältlich, beispielsweise als Dowfax® 2A1 (Dow Chemical Company). Geeignet sind auch Mischungen der vorgenannten Salze.

Bevorzugte Dispergiermittel D1a sind die Salze, insbesondere die Alkalimetallsalze von Schwefelsäurehalbestern ethoxylierter Alkanole, insbesondere von Schwefelsäurehalbestern ethoxylierter $C_8$-$C_{22}$-Alkanole, vorzugsweise mit einem Ethoxylierungsgrad (EO-Grad) im Bereich von 2 bis 40, von Schwefelsäurehalbestern ethoxylierter Alkylphenole, insbesondere von Schwefelsäurehalbestern ethoxylierter $C_4$-$C_{18}$-Alkylphenole (EO-Grad vorzugsweise 3 bis 40), von Alkylbenzolsulfonsäuren, insbesondere von $C_4$-$C_{22}$-Alkylbenzolsulfonsäuren, sowie von ein- oder zweifach sulfonierten, alkylsubstituierten Diphenylethern, z.B. von Bis(phenylsulfonsäure)ethern, die an einem oder beiden aromatischen Ringen eine $C_4$-$C_{24}$-Alkylgruppe tragen, sowie Mischungen davon.

Weitere geeignete anionische Emulgatoren finden sich in Houben-Weyl, Methoden der organischen Chemie, Band XIV/1, Makromolekulare Stoffe, Georg-Thieme-Verlag, Stuttgart, 1961, S. 192-208.

Dispergiermittelzusammensetzung D1 umfasst weiterhin wenigstens ein zweites Dispergiermittel D1b, das wenigstens eine Phosphat- oder Phosphonatgruppe aufweist, wobei die Phosphat- bzw. Phosphonatgruppe in der Säureform oder in der Salzform, beispielsweise in Form eines Alkali- und Ammoniumsalzes davon, vorliegen kann. Geeignete Dispergiermittel D1b sind beispielsweise Mono- und Dialkylphosphate, insbesondere $C_8$-$C_{22}$-Alkylphosphate, Phosphorsäurehalbester C2-C3-alkoxylierter Alkanole, vorzugsweise mit einem Alkoxylierungsgrad im Bereich von 2 bis 40, insbesondere im Bereich von 3 bis 30, beispielsweise Phosphorsäurehalbester ethoxylierter $C_8$-$C_{22}$-Alkanole, vorzugsweise mit einem Ethoxylierungsgrad (EO-Grad) im Bereich von 2 bis 40, Phosphorsäurehalbester propoxylierter $C_8$-$C_{22}$-Alkanole, vorzugsweise mit einem Propoxylierungsgrad (PO-Grad) im Bereich von 2 bis 40 und Phosphorsäure-

halbester ethoxylierter-co-propoxylierter $C_8$-$C_{22}$-Alkanole,vorzugsweise mit einem Ethoxylierungsgrad (EO-Grad) im Bereich von 1 bis 20 und einem Propoxylierungsgrad von 1 bis 20, Phosphorsäurehalbester ethoxylierter Alkylphenole, insbesondere Phosphorsäurehalbester ethoxylierter $C_4$-$C_{18}$-Alkylphenole (EO-Grad vorzugsweise 3 bis 40), Alkylphosphonsäuren, insbesondere $C_8$-$C_{22}$-Alkylphosphonsäuren sowie Alkylbenzolphosphonsäuren, insbesondere $C_4$-$C_{22}$-Alkylbenzolphosphonsäuren. Geeignet sind auch die Salze der vorgenannten Dispergiermittel D1b, insbesondere die Alkali- und Ammoniumsalze von. Geeignet sind auch der vorgenannten Dispergiermittel D1b einschließlich Mischungen der vorgenannten Salze.

Bevorzugte Dispergiermittel D1b sind Phosphorsäurehalbester ethoxylierter Alkanole, insbesondere Phosphorsäurehalbester ethoxylierter $C_8$-$C_{22}$-Alkanole, vorzugsweise mit einem Ethoxylierungsgrad (EO-Grad) im Bereich von 2 bis 30, sowie Phosphorsäurehalbester ethoxylierter Alkylphenole, insbesondere Phosphorsäurehalbester ethoxylierter $C_4$-$C_{18}$-Alkylphenole (EO-Grad vorzugsweise 2 bis 20), Phosphorsäurehalbester ethoxylierter-co-propoxylierter $C_8$-$C_{22}$-Alkanole,vorzugsweise mit einem Ethoxylierungsgrad (EO-Grad) im Bereich von 2 bis 20 und einem Propoxylierungsgrad von 1 bis 10, sowie die Salze der vorgenannten Phosphorsäurehalbester, insbesondere die Alkalimetallsalze davon.

Besonders bevorzugte Dispergiermittel D1b sind Phosphorsäurehalbester ethoxylierter-co-propoxylierter $C_8$-$C_{22}$-Alkanole,vorzugsweise mit einem Ethoxylierungsgrad (EO-Grad) im Bereich von 2 bis 20 und einem Propoxylierungsgrad von 1 bis 10.

Im Hinblick auf die Dispergiermittel D1a und D1b und ebenso im Hinblick auf die Dispergiermittel D2a und D2b versteht man unter den Alkalimetallsalzen vor allem die Natrium- und Kaliumsalze. Unter Ammoniumsalze versteht man vor allem die Salze, die $NH_4^+$ als Gegenion tragen.

Vorzugsweise enthält die Dispergiermittelzusammensetzung die Dispergiermittel D1a und D1b in einem Gewichtsverhältnis von D1a zu D1b im Bereich von 1 : 100 bis 2 : 1, insbesondere im Bereich von 1 : 50 bis 1,5 : 1.

Neben den vorgenannten Dispergiermitteln D1a und D1b kann die Dispergiermittelzusammensetzung auch ein oder mehrere nichtionische oberflächenaktive Substanzen (= nichtionische Dispergiermittel D1c) enthalten, die insbesondere unter nichtionischen Emulgatoren ausgewählt sind. Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_{10}$), Ethoxylate langkettiger Alkohole (EO-Grad: 3 bis 100, Alkylrest: $C_8$-$C_{36}$) sowie Polyethylenoxid/Polypropylenoxid-Homo- und Copolymere. Diese können die Alkylenoxideinheiten statistisch verteilt oder in Form von Blöcken einpolymerisiert enthalten. Gut geeignet sind z. B. EO/PO-Blockcopolymere. Bevorzugt werden Ethoxylate langkettiger Alkanole (Alkylrest $C_1$-$C_{30}$, mittlerer Ethoxylierungsgrad 5 bis 100) und darunter besonders bevorzugt solche mit einem linearen $C_{12}$-$C_{20}$-Alkylrest und einem mittleren Ethoxylierungsgrad von 10 bis 50 sowie ethoxylierte Monoalkylphenole, eingesetzt.

Vorzugsweise enthält die Dispergiermittelzusammensetzung M1 weniger als 20 Gew.-%, insbesondere nicht mehr als 10 Gew.-% an nichtionischen Dispergiermitteln D1c, bezogen auf die Gesamtmenge der Dispergiermittel D1a und D1b, und speziell keine nichtionischen Dispergiermittel D1c.

Vorzugsweise wird man die Dispergiermittelzusammensetzung D1 in einer solchen Menge einsetzen, dass die Menge von Dispergiermittel in der Dispergiermittelzusammensetzung D1 im Bereich von 0,2 bis 5 Gew.-%, insbesondere im Bereich von 0,5 bis 3 Gew.-%, bezogen auf die Monomere in der Monomerzusammensetzung M1 liegt.

In Schritt iii) des erfindungsgemäßen Verfahrens erfolgt die radikalische Emulsionspolymerisation der Monomerzusammensetzung M2, die 90 bis 99,9, insbesondere 90 bis 99 Gew.-% und speziell 90 bis 98 gew.-% Monomere MA2 und 0,1 bis 10 Gew.-%, insbesondere 1 bis 10 Gew.-% und speziell 2 bis 10 Gew.-% Monomere MB2umfasst, wobei die Mengenangaben der Monomere M2a und M2b jeweils auf das Gesamtgewicht der in der Monomerzusammensetzung M2 enthaltenen Monomere bezogen sind. Beispiele für Monomere MA2 sind die als Monomere MA1 genannten Monomere. Bevorzugte Monomere MA2 sind die im Zusammenhang mit den Monomeren MA1 als bevorzugt genannten Monomere.

Besonders bevorzugte Monomere MA2 sind

- Ester der Methacrylsäure mit 1 bis 4 C-Atome aufweisenden Alkanolen wie Methylmethacrylat, Ethylmethacrylat, n-Butylmethacrylat und tert-Butylmethacrylat, und Mischungen davon mit Estern der Acrylsäure mit 1 bis 4 C-Atome aufweisenden Alkanolen, speziell mit tert.-Butylacrylat.

Die Monomere MB1 weisen eine polymerisierbare, ethylenisch ungesättigte Doppelbindung auf und besitzen eine Wasserlöslichkeit von wenigstens 200 g/l oder sind vollständig mit Wasser mischbar Beispiele für Monomere MB2 sind die als Monomere MB1 genannten Monomere. Bevorzugte Monomere MB2 sind die im Zusammenhang mit den Monomeren MB1 als bevorzugt genannten Monomere.

Besonders bevorzugte Monomere MB2 sind

- monoethylenisch ungesättigte Monocarbonsäuren mit 3 bis 8 C-Atomen wie Acrylsäure und Methacrylsäure;

- primäre Amide monoethylenisch ungesättigter Monocarbonsäuren mit 3 bis 8 C-Atomen wie Acrylamid und Methacrylamid;

und deren Mischungen.

Die Monomere M2 werden vorzugsweise so ausgewählt, dass die theoretische Glasübergangstemperatur des resultierenden Polymeren nach Fox, im Folgenden $T_g(2)$, wenigstens 30 K, insbesondere wenigstens 50 K z.B. 20 bis 190 K, insbesondere 50 bis 140 K oberhalb von $T_g(1)$ liegt. Vorzugsweise weist $T_g(2)$ einen Wert von mindestens 50°C, insbesondere mindestens 70°C auf und liegt beispielsweise im Bereich von 50°C bis 150°C und insbesondere im Bereich von 70°C bis 120°C.

Die Menge der in der Polymerisationsstufe iii) eingesetzten Monomere M1 liegt in der Regel im Bereich von 1 bis 49,9 Gew.-%, vorzugsweise im Bereich von 4,5 bis 39,5 Gew.-%, insbesondere im Bereich von 9,5 bis 29,5 Gew.-%, bezogen auf die Gesamtmasse der Monomeren M0 und der Monomeren der Monomerzusammensetzungen M1 und M2.

Die Polymerisation der Monomerzusammensetzung M2 erfolgt in Gegenwart einer Dispergiermittelzusammensetzung D2. Diese umfasst wenigstens ein erstes Dispergiermittel D2b, das wenigstens eine Phosphat- oder Phosphonatgruppe aufweist, wobei die Phosphat- bzw. Phosphonatgruppe in der Säureform oder in der Salzform, beispielsweise in Form eines Alkali- und Ammoniumsalze davon, vorliegen kann. Daneben kann die Dispergiermittelzusammensetzung D2 weiterhin ein oder mehrere Dispergiermittel D2a umfassen, die wenigstens eine Sulfat oder Sulfonatgruppe aufweisen sowie ggf. auch ein oder mehrere nichtionische Dispergiermittel D2c.

Als Dispergiermittel D2b kommen grundsätzlich die als Dispergiermittel D1b genannten Dispergiermittel in Betracht. Geeignete Dispergiermittel D2b sind beispielsweise Mono- und Dialkylphosphate, insbesondere $C_8$-$C_{22}$-Alkylphosphate, Phosphorsäurehalbester $C_2$-$C_3$-alkoxylierter Alkanole, vorzugsweise mit einem Alkoxylierungsgrad im Bereich von 2 bis 40, insbesondere im Bereich von 3 bis 30, beispielsweise Phosphorsäurehalbester ethoxylierter $C_8$-$C_{22}$-Alkanole, vorzugsweise mit einem Ethoxylierungsgrad (EO-Grad) im Bereich von 2 bis 40, Phosphorsäurehalbester propoxylierter $C_8$-$C_{22}$-Alkanole, vorzugsweise mit einem Propoxylierungsgrad (PO-Grad) im Bereich von 2 bis 40 und Phosphorsäurehalbester ethoxylierter-co-propoxylierter $C_8$-$C_{22}$-Alkanole, vorzugsweise mit einem Ethoxylierungsgrad (EO-Grad) im Bereich von 1 bis 20 und einem Propoxylierungsgrad von 1 bis 20, Phosphorsäurehalbester ethoxylierter Alkylphenole, insbesondere Phosphorsäurehalbester ethoxylierter $C_4$-$C_{18}$-Alkylphenole (EO-Grad vorzugsweise 3 bis 40), Alkylphosphonsäuren, insbesondere $C_8$-$C_{22}$-Alkylphosphonsäuren sowie Alkylbenzolphosphonsäuren, insbesondere $C_4$-$C_{22}$-Alkylbenzolphosphonsäuren. Geeignet sind auch die Salze der vorgenannten Dispergiermittel D2b, insbesondere die Alkali- und Ammoniumsalze von. Geeignet sind auch der vorgenannten Dispergiermittel D2b einschließlich Mischungen der vorgenannten Salze.

Bevorzugte Dispergiermittel D2b sind Phosphorsäurehalbester ethoxylierter Alkanole, insbesondere Phosphorsäurehalbester ethoxylierter $C_8$-$C_{22}$-Alkanole, vorzugsweise mit einem Ethoxylierungsgrad (EO-Grad) im Bereich von 2 bis 30, sowie Phosphorsäurehalbester ethoxylierter Alkylphenole, insbesondere Phosphorsäurehalbester ethoxylierter $C_4$-$C_{18}$-Alkylphenole (EO-Grad vorzugsweise 2 bis 20), Phosphorsäurehalbester ethoxylierter-co-propoxylierter $C_8$-$C_{22}$-Alkanole, vorzugsweise mit einem Ethoxylierungsgrad (EO-Grad) im Bereich von 2 bis 20 und einem Propoxylierungsgrad von 1 bis 10, sowie die Salze der vorgenannten Phosphorsäurehalbester, insbesondere die Alkalimetallsalze davon.

Besonders bevorzugte Dispergiermittel D2b sind Phosphorsäurehalbester ethoxylierter-co-propoxylierter $C_8$-$C_{22}$-Alkanole, vorzugsweise mit einem Ethoxylierungsgrad (EO-Grad) im Bereich von 2 bis 20 und einem Propoxylierungsgrad von 1 bis 10.

Als Dispergiermittel D2a kommen grundsätzlich die als Dispergiermittel D1a genannten Dispergiermittel in Betracht. Bevorzugte Dispergiermittel D2a sind die Salze, insbesondere die Alkalimetallsalze von Schwefelsäurehalbestern ethoxylierter Alkanole, insbesondere von Schwefelsäurehalbestern ethoxylierter $C_8$-$C_{22}$-Alkanole, vorzugsweise mit einem Ethoxylierungsgrad (EO-Grad) im Bereich von 2 bis 40, von Schwefelsäurehalbestern ethoxylierter Alkylphenole, insbesondere von Schwefelsäurehalbestern ethoxylierter $C_4$-$C_{18}$-Alkylphenole (EO-Grad vorzugsweise 3 bis 40), von Alkylbenzolsulfonsäuren, insbesondere von $C_4$-$C_{22}$-Alkylbenzolsulfonsäuren, sowie von ein- oder zweifach sulfonierten, alkylsubstituierten Diphenylethern, z.B. von Bis(phenyl-sulfonsäure)ethern, die an einem oder beiden aromatischen Ringen eine $C_4$-$C_{24}$-Alkylgruppe tragen, sowie Mischungen davon.

Vorzugsweise enthält die Dispergiermittelzusammensetzung die Dispergiermittel D2a und D2b in einem Gewichtsverhältnis von D2a zu D2b im Bereich von 0 bis 1 : 2, insbesondere im Bereich von 0 bis 1 : 5. Insbesondere enthält die Dispergiermittelzusammensetzung 2 nicht mehr als 10 Gew.-% an Dispergiermitteln D2a, bezogen auf die Gesamtmenge der Dispergiermittel D2a und D2b, und speziell keine Dispergiermittel D2a.

Neben den vorgenannten Dispergiermitteln D2b und ggf. D2a kann die Dispergiermittelzusammensetzung auch ein oder mehrere nichtionische oberflächenaktive Substanzen (= nichtionische Dispergiermittel D2c) enthalten, die insbesondere unter nichtionischen Emulgatoren ausgewählt sind. Brauchbare nichtionische Dispergiermittel D2c sind die im Zusammenhang mit den nichtionischen Dispergiermitteln D1c genannten nichtionischen Emulgatoren.

Vorzugsweise enthält die Dispergiermittelzusammensetzung M2 weniger als 20 Gew.-%, insbesondere nicht mehr als 10 Gew.-% an nichtionischen Dispergiermitteln D2c, bezogen auf die Gesamtmenge der Dispergiermittel D2a und D2b, und speziell keine nichtionischen Dispergiermittel D2c.

Vorzugsweise wird man die Dispergiermittelzusammensetzung D2 in einer solchen Menge einsetzen, dass die Menge von Dispergiermittel in der Dispergiermittelzusammensetzung D2 im Bereich von 2 bis 15 Gew.-%, insbesondere im Bereich von 3,5 bis 10 Gew.-%, bezogen auf die Monomere in der Monomerzusammensetzung M2 liegt.

Für die Eigenschaften der erfindungsgemäßen Polymerdispersionen hat es sich als vorteilhaft erwiesen, wenn das Gewichtsverhältnis (1) von den in der Dispergiermittelzusammensetzung D1 enthaltenen Dispergiermittel zu den Monomeren der Monomerzusammensetzung M1 kleiner ist als das Gewichtsverhältnis (2) von den in der Dispergiermittelzusammensetzung D1 enthaltenen Dispergiermittel zu den Monomeren der Monomerzusammensetzung M2, d.h. wenn der Quotient aus Gewichtsverhältnis (1) zu Gewichtsverhältnis (2) kleiner 1 ist und insbesondere im Bereich von 1 : 1,5 bis 1 : 10 liegt.

Für die Eigenschaften der erfindungsgemäßen Polymerdispersionen hat es sich weiterhin als vorteilhaft erwiesen, wenn die Dispergiermittelmenge in der Dispergiermittelzusammensetzung D1 im Bereich von 0,5 bis 3 Gew.-%, bezogen auf die Monomere in der Monomerzusammensetzung M1 und die Dispergiermittelmenge in der Dispergiermittelzusammensetzung D2 im Bereich von 3,5 bis 10 Gew.-%, bezogen auf die Monomere in der Monomerzusammensetzung M2 liegt.

Erfindungsgemäß erfolgt die Herstellung der wässrigen Polymerdispersion durch sukzessive Emulsionspolymerisation der Monomerzusammensetzungen M1 und M2, wobei man die Monomerzusammensetzung M1 in Gegenwart der Polymerdispersion S bzw. in der Polymerdispersion S einer radikalischen Emulsionspolymerisation unterwirft und anschließend in der so erhaltenen Polymerdispersion die Monomerzusammensetzung M2 einer radikalischen Emulsionspolymerisation unterwirft

In bevorzugten Ausführungsformen des erfindungsgemäßen Verfahrens wird man so vorgehen, dass man die Polymerdispersion in situ herstellt, d.h. die Monomere M0 und ggf. M0* einer radikalischen wässrigen Emulsionspolymerisation unterwirft, d.h. die ethylenisch ungesättigten Monomere M0 und ggf. M0* in Anwesenheit wenigstens eines Dispergiermittels und wenigstens eines Polymerisationsinitiators nach der Methode einer radikalischen Emulsionspolymerisation polymerisiert und anschließend die Schritte ii) und iii) in der so hergestellten Polymerdispersion S durchführt.

Die für die Durchführung der radikalischen Emulsionspolymerisiation der Monomere M0 und der Monomerzusammensetzungen M1 und M2 erforderlichen Bedingungen sind dem Fachmann hinreichend geläufig, beispielsweise aus dem eingangs zitierten Stand der Technik sowie aus "Emulsionspolymerisation" in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)].

Die Auslösung der radikalisch initiierten wässrigen Emulsionspolymerisation erfolgt mittels eines radikalischen Polymerisationsinitiators (Radikalinitiator bzw. Radikalstarter). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Bevorzugte Radikalstarter sind anorganische Peroxide, insbesondere Peroxodisulfate, sowie Redoxinitiatorsysteme.

In der Regel beträgt die Menge des eingesetzten Radikalinitiators, bezogen auf die Gesamtmonomerenmenge der jeweiligen Polymerisationsstufe, 0,01 bis 5 Gew.-%, bevorzugt 0,1 bis 3 Gew.-% und insbesondere bevorzugt 0,2 bis 1,5 Gew.-%.

Die bei dem erfindungsgemäßen Verfahren für die Emulsionspolymerisation in Schritt ii) und iii) benötigte Menge an Radikalinitiator kann vollständig im Polymerisationsgefäß vorgelegt werden. Es ist jedoch vorteilhaft, nichts oder lediglich eine Teilmenge des Radikalinitiators, vorzugsweise nicht mehr als 30 Gew.-%, insbesondere nicht mehr als 20 Gew.-%, bezogen auf die Gesamtmenge des in den Schritten ii) und iii) benötigten Radikalinitiators, im wässrigen Polymerisationsmedium vor Initiierung der Polymerisationsreaktion in Polymerisationsstufe ii) vorzulegen und dann unter Polymerisationsbedingungen während der erfindungsgemäßen radikalischen Emulsionspolymerisation in Polymerisationsstufe ii) und Polymerisationsstufe iii) die Gesamtmenge bzw. die gegebenenfalls verbliebene Restmenge nach Maßgabe des Verbrauchs diskontinuierlich in einer oder mehreren Portionen oder kontinuierlich mit gleichbleibenden oder sich ändernden Mengenströmen zuzugeben.

Unter Initiierung der Polymerisationsreaktion wird der Start der Polymerisationsreaktion der im wässrigen Polymerisationsmedium vorliegenden Monomeren nach Radikalbildung des Radikalinitiators verstanden. Dabei kann die Initiierung der Polymerisationsreaktion durch Zugabe von Radikalinitiator zum wässrigen Polymerisationsmedium im Polymerisationsgefäß unter Polymerisationsbedingungen erfolgen. Es ist aber auch möglich, die Monomere M1 im Polymerisationsgefäß vorzulegen, eine Teil- oder die Gesamtmenge des Radikalinitiators dem Polymerisationsgefäß in Polymerisationsstufe ii) unter Bedingungen, welche nicht geeignet sind eine Polymerisationsreaktion auszulösen, beispielsweise bei tiefer Temperatur, zuzugeben und danach im wässrigen Polymerisationsmedium Polymerisationsbedingungen einzustellen. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, Polymerisationstemperatur und Polymerisationsdruck so ausgewählt, dass immer genügend Startradikale zur Verfügung stehen, um die Polymerisationsreaktion zu initiieren bzw. aufrechtzuerhalten.

Insbesondere hat es sich bewährt, eine Teilmenge des Radikalinitiators, vorzugsweise nicht mehr als 30 Gew.-%, insbesondere nicht mehr als 20 Gew.-%, bezogen auf die Gesamtmenge des für die Polymerisationsstufen ii) und iii) benötigten Polymerisationsinitiators vorzulegen.

Zur Polymerisation in Schritt ii) können die Monomere M1 vollständig im Reaktionsgefäß vorgelegt werden oder im Verlauf der Polymerisation zugeführt werden. Insbesondere hat es sich bewährt, die Hauptmenge der Monomere M1, insbesondere wenigstens 80 Gew.-% oder die Gesamtmenge der Monomere M1 unter Polymerisationsbedingungen dem Polymerisationsgefäß zuzugeben. Vorzugsweise erfolgt die Zugabe der Monomere M1 über einen Zeitraum von wenigstens 30 Minuten, insbesondere über einen Zeitraum von 0,5 bis 10 h und speziell über einen Zeitraum von 1 bis 5 h. Die Zugabe der Monomere M1 kann in Substanz oder vorzugsweise in Form einer wässrigen Emulsion erfolgen. Bevorzugt erfolgt die Zugabe der Monomere M1 kontinuierlich mit gleichbleibenden Mengenströmen. Bevorzugt erfolgt die Dosierung der Gesamtmenge der Monomere M1 als Monomerengemisch der Monomere MA1 und MB1, insbesondere vorteilhaft in Form einer wässrigen Monomerenemulsion. Wesentlich ist, dass erfindungsgemäß auch Verfahrensvarianten umfasst sein sollen, bei denen sich in Polymerisationsstufe ii) die Zusammensetzungen der Monomerzusammensetzung M1 ändern, beispielsweise in einer dem Fachmann geläufigen Gradienten- oder Stufenfahrweise. In bevorzugten Ausführungsformen erfolgt während der Polymerisationstufe ii) ohne Änderung der Monomerzusammensetzung M1.

Die Polymerisationsstufe iii) wird im Anschluss an die Polymerisationsstufe ii) durchgeführt. Der Zeitraum zwischen der Beendigung der Polymerisationstufe ii) und dem Beginn der Polymerisation der Monomere M2 kann wenige Minuten bis mehrere Stunden betragen. Dabei kann die Temperatur unterhalb der für die Polymerisation der Monomere M1 bzw. M2 erforderliche Temperatur abgesenkt werden. Vorzugsweise erfolgt jedoch die Polymerisation der Monomere M2 in Schritt iii) unmittelbar im Anschluss an die Polymerisation der Monomere M1 in Schritt ii). Vorzugsweise sind die Polymerisationsbedingungen in Schritt ii) so gewählt, dass die Monomere M1 in Polymerisationsstufe ii) vor Beginn der Zugabe der Monomere M2 bis zu einem Umsatz von > 95 Gew.-%, vorteilhaft ≥ 98 Gew.-% umgesetzt werden.

Zur Polymerisation in Schritt iii) können die Monomere M2 nach Beendigung von Schritt ii) vollständig im Reaktionsgefäß vorgelegt werden oder im Verlauf der Polymerisation zugeführt werden. Insbesondere hat es sich bewährt, die Hauptmenge der Monomere M2, insbesondere wenigstens 80 Gew.-% oder die Gesamtmenge der Monomere M2 unter Polymerisationsbedingungen dem Polymerisationsgefäß zuzugeben. Vorzugsweise erfolgt die Zugabe der Monomere M2 über einen Zeitraum von wenigstens 10 Minuten, insbesondere über einen Zeitraum von 20 min. bis 50 h und speziell über einen Zeitraum von 0,5 bis 2 h. Die Zugabe der Monomere M2 kann in Substanz oder vorzugsweise in Form einer wässrigen Emulsion erfolgen. Bevorzugt erfolgt die Zugabe der Monomere M2 kontinuierlich mit gleichbleibenden Mengenströmen. Bevorzugt erfolgt die Dosierung der Gesamtmenge der Monomere M2 als Monomerengemisch der Monomere MA2 und MB2, insbesondere vorteilhaft in Form einer wässrigen Monomerenemulsion. Wesentlich ist, dass erfindungsgemäß auch Verfahrensvarianten umfasst sein sollen, bei denen sich in Polymerisationsstufe iii) die Zusammensetzungen der Monomerzusammensetzung M2 ändern, beispielsweise in einer dem Fachmann geläufigen Gradienten- oder Stufenfahrweise. In bevorzugten Ausführungsformen erfolgt während der Polymerisationstufe iii) ohne Änderung der Monomerzusammensetzung M2.

Die erfindungsgemäße radikalische wässrige Emulsionspolymerisation kann bei Temperaturen im Bereich von 0 bis 170 °C durchgeführt werden. Dabei werden in der Regel Temperaturen von 50 bis 120 °C, häufig 60 bis 120 °C und oft 70 bis 110 °C angewendet. Die erfindungsgemäße radikalische wässrige Emulsionspolymerisation kann bei einem Druck kleiner, gleich oder größer 1 atm (Atmosphärendruck) durchgeführt werden, so dass die Polymerisationstemperatur 100 °C übersteigen und bis zu 170 °C betragen kann. Vorzugsweise werden leichtflüchtige Monomere, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emuslionspolymerisation bei 1 atm unter Sauerstoffausschluß, beispielsweise unter Inertgasatmosphäre, wie beispielsweise unter Stickstoff oder Argon durchgeführt.

Die Polymerisation der Schritte ii) und iii) kann gegebenenfalls in Gegenwart von Reglern durchgeführt werden. Unter Reglern versteht man radikalkettenübertragende Verbindungen, welche das Molekulargewicht verringern bzw. das Kettenwachstum bei der Polymerisation kontrollieren. Beispiele für Regler sind aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol,. Es ist aber auch möglich, Gemische sich nicht störender vorgenannter Regler einzusetzen. Die im erfindungsgemäßen Verfahren ggf. eingesetzte Gesamtmenge Reglern, bezogen auf die Gesamtmonomerenmenge M1 + M2, wird in der Regel 1 Gew.-% nicht überschreiten.

Die Emulsionspolymerisation in Schritt ii) erfolgt naturgemäß in einem wässrigen Polymerisationsmedium, das neben Wasser das Polymerisat der Polymerdispersion S und die oberflächenaktive Substanz der Polymerdispersion S enthält. Die Emulsionspolymerisation in Schritt iii) erfolgt naturgemäß in einem wässrigen Polymerisationsmedium, das neben Wasser, das Polymerisat der Polymerisationsstufe ii) und die oberflächenaktive Substanz der Polymerdispersion S sowie die oberflächenaktiven Substanzen der Dispergiermittelzusammensetzung D1 enthält. Das wässrige Reaktionsmedium in den Polymerisationsstufen ii) und iii) kann prinzipiell auch in untergeordneten Mengen (≤ 5 Gew.-%) wasserlösliche organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Häufig ist es vorteilhaft, wenn die nach Abschluss der Polymerisationsstufe iii) erhaltene wässrige Polymerisatdispersion einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung der wässrigen Polymerisatdispersion mit Wasserdampf oder Inertgas. Entsprechende chemische und/oder physikalische Methoden sind dem Fachmann geläufig - siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und DE-A 19847115. Dabei bietet die Kombination aus chemischer und physikalischer Nachbehandlung den Vorteil, dass neben den nicht umgesetzten ethylenisch ungesättigten Monomeren, auch noch andere störende leichtflüchtige organischen Bestandteile (die sogenannten VOCs [volatile organic compounds]) aus der wässrigen Polymerisatdispersion entfernt werden.

Die Polymerteilchen der nach dem erfindungsgemäßen Verfahren erhältlichen Polymerteilchen weisen wenigstens 3 Polymerphasen P0, P1 und P2 auf, wobei die Polymerphase P0 aus den Monomeren M0, die Polymerphase P1 aus den Monomeren der Monomerzusammensetzung M1 und die Polymerphase P2 aus den Monomeren der Monomerzusammenetzung M2 aufgebaut ist.

Dementsprechend hat die Glasübergangstemperatur der Polymerphase P1 vorzugsweise einen Wert von maximal 30°C, insbesondere maximal 20°C und liegt beispielsweise im Bereich von -40°C bis +30°C und insbesondere im Bereich von -20°C bis +20°C.

Die Glasübergangstemperatur der Polymerphase P2 hat vorzugsweise einen Wert von von mindestens 50°C, insbesondere mindestens 70°C auf und liegt beispielsweise im Bereich von 50°C bis 150°C und insbesondere im Bereich von 70°C bis 120°C.

Die Differenz zwischen der Glasübergangstemperatur der Polymerphase P1 und der Glasübergangstemperatur der Polymerphase P2 beträgt in der Regel wenigstens 30 K, insbesondere wenigstens 50 K z.B. 20 bis 190 K, insbesondere 50 bis 140 K.

Die Glasübergangstemperatur wird nach dem DSC-Verfahren (Differential Scanning Calorimetry, 20 K/min, midpoint-Messung) nach DIN 53765:1994-03 oder ISO 11357-2 durchgeführt, wobei die Probenvorbereitung vorzugsweise nach DIN EN ISO 16805:2005 erfolgt.

Die erfindungsgemäß erhaltenen wässrigen Polymerisatdispersionen weisen üblicherweise Polymerfeststoffgehalte im Bereich von 10 bis 70 Gew.-%, häufig 20 bis 65 Gew.-% und oft 30 bis 60 Gew.-%, jeweils bezogen auf das Gesamtgewicht der wässrigen Polymerdispersion, auf.

Die nach dem erfindungsgemäßen Verfahren erhältlichen wässrigen Polymerisatdispersionen weisen Polymerisatteilchen auf, die in der Regel einen gewichtsmittleren Durchmesser $D_W$ im Bereich von 30 bis 500 nm, insbesondere im Bereich von 50 bis 200 nm und speziell im Bereich von 50 nm bis 150 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Die nach dem erfindungsgemäßen Verfahren erhältlichen wässrigen Polymerisatdispersionen weisen Polymerisatteilchen auf, die in der Regel eine enge Teilchengrößenverteilung besitzen. Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser $D_{w50}$ und zahlenmittleren Teilchendurchmesser $D_{N50}$ $[D_{w50}/D_{N50}] \leq 2{,}0$, bevorzugt $\leq 1{,}5$ und insbesondere bevorzugt $\leq 1{,}2$ oder $\leq 1{,}1$ ist.

Die nach dem erfindungsgemäßen Verfahren zugänglichen wässrigen Polymerisatdispersionen mit enger Teilchengrößenverteilungen und gewichtsmittleren Teilchendurchmessern $D_W \leq 200$ nm, insbesondere mit $D_W \leq 150$ nm weisen eine überraschend hohe Transparenz auf und eignen sich daher insbesondere als Bindemittel in transparenten wässrigen Formulierungen für Holzbeschichtungen. Hierbei zeigen sich häufig Vorteile wie geringerer Bedarf an Verdickern zur Einstellung einer bestimmten Viskosität sowie gute und tiefe Einfärbung bei Verwendung von Farbpigmenten, gutes Eindringvermögen der Formulierung in die Holzoberfläche oder gute "Anfeuerung" der Holzmaserung. Außerdem weisen die erfindungsgemäßen wässrigen Polymerisatdispersionen eine verbesserte Filtrierbarkeit im Vergleich zu entsprechenden, nicht erfindungsgemäßen wässrigen Polymerisatdispersionen auf.

Selbstverständlich können die nach dem erfindungsgemäßen Verfahren zugänglichen erfindungsgemäßen wässrigen Polymerisatdispersionen als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln eingesetzt werden.

Ferner sind aus den erfindungsgemäßen wässrigen Polymerisatdispersionen in einfacher Weise (beispielsweise Gefrier- oder Sprühtrocknung) die entsprechenden Polymerisatpulver zugänglich. Diese erfindungsgemäß zugänglichen Polymerisatpulver lassen sich ebenfalls als Komponente bei der Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln einsetzen.

Die erfindungsgemäßen wässrigen Polymerdispersionen können in pigmentfreien und pigmenthaltigen Beschichtungszusammensetzungen formuliert werden. In diesem Zusammenhang umfasst der Begriff "pigmenthaltigen Beschichtungszusammensetzungen" insbesondere pigmenthaltige Farben und Lasuren. In bevorzugter Weise eignen sie sich zur Herstellung pigmenthaltiger Farben, die wenigstens ein Pigment, insbesondere wenigstens ein Weißpigment enthalten. In ebenfalls bevorzugter Weise eignen sie sich zur Herstellung von Lasuren, die im Unterschied zu Farben transparent oder semitransparent sind und die, anders als Farben nur geringe Mengen an Pigment enthalten, wobei die Pigmente vorzugsweise unter (semi)transparenten Pigmenten, wie beispielsweise ultrafeinem Eisenoxid, ausgewählt sind. Neben den Pigmenten können die Beschichtungszusammensetzungen einen oder mehrere Füllstoffe, insbesondere einen oder mehrere anorganische Füllstoffe enthalten.

Der Anteil der Pigmente und Füllstoffe in Beschichtungszusammensetzungen kann in an sich bekannter Weise durch die Pigmentvolumenkonzentration (PVK) beschrieben werden. Die PVK beschreibt das Verhältnis des Volumens an Pigmenten ($V_P$) und Füllstoffen ($V_F$) zum Gesamtvolumen, bestehend aus den Volumina an Bindemittel ($V_B$), Pigmenten und Füllstoffen eines getrockneten Beschichtungsfilms in Prozent: PVK = ($V_P$ + $V_F$) x 100 / ($V_P$ + $V_F$ + $V_B$).

Die erfindungsgemäßen Wirkungen der Polymerdispersionen kommt insbesondere bei pigmenthaltigen Farben zum Tragen, die eine PVK von wenigstens 5, insbesondere wenigstens 10 aufweisen. Vorzugsweise wird die PVK einen Wert von 50, insbesondere 40 nicht überschreiten und liegt speziell im Bereich von 10 bis 35. Die erfindungsgemäßen Wirkungen der Polymerdispersionen kommen jedoch auch in Lasuren zum Tragen, die typischerweise einen Pigment/Füllstoffgehalt unter 5 Gew.-% aufweisen, bezogen auf die Lasur, und dementsprechend eine PVK unterhalb 10, insbesondere unterhalb 5 aufweisen.

Geeignete Pigmente sind beispielsweise anorganische Weißpigmente, wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, Anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Ropaque®- und AQACell®-Dispersionen. Weiterhin geeignet sind die Luconyl®-Marken der Fa. BASF SE, wie z.B. das Lyconyl®-Gelb, Luconyl®-Braun und Luconyl®-Rot, insbesondere die transparenten Varianten.

Beispiele für geeignete Füllstoffe sind Alumosilikate, wie Feldspäte, Silikate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid, etc. In den erfindungsgemäßen Beschichtungsmittelzusammensetzungen werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe. Zu Füllstoffen zählen auch Mattierungsmittel, die so gewünscht den Glanz stark beeinträchtigen. Mattierungsmittel sind in der Regel transparent und können sowohl organisch als auch anorganisch sein. Beispiele für Mattierungsmittel sind anorganische Silikate, z. B. die Syloid®-Marken von W. R. Grace & Company und die Acematt®-Marken von der Fa. Evonik GmbH. Organische Mattierungsmittel sind z. B. erhältlich von der Fa. BYK-Chemie GmbH unter den Ceraflour®- und den Ceramat®-Marken, von der Fa. Deuteron GmbH unter der Deuteron MK®-Marke.

In bevorzugten Ausgestaltungen sind die Beschichtungszusammensetzungen als weißpigmenthaltige Beschichtungsmittelzusammensetzung ausgestaltet, d. h. sie enthalten wenigstens ein Weißpigment und gegebenenfalls einen oder mehrere Füllstoffe. Insbesondere enthalten sie als Weißpigment Titandioxid, vorzugsweise in der Rutilform, gegebenenfalls in Kombination mit einem oder mehreren Füllstoffen. Besonders bevorzugt enthalten die erfindungsgemäßen Beschichtungszusammensetzungen ein Weißpigment, insbesondere Titandioxid, vorzugsweise in der Rutilform, in Kombination mit einem oder mehreren Füllstoffen, z. B. Kreide, Talkum oder deren Gemische.

Die erfindungsgemäßen wässrigen Beschichtungszusammensetzungen (wässrige Anstrichmittel) können neben dem Polymer P1, dem Polymer P2, dem Pigment und Wasser weitere Hilfsmittel enthalten.

Zu den üblichen Hilfsmitteln zählen

- Netz- oder Dispergiermittel,
- Filmbildehilfsmittel,
- Verdicker,
- Verlaufsmittel,
- Biozide und
- Entschäumer.

Netz- oder Dispergiermittel sind z. B. Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Geeignete Filmbildehilfsmittel sind z. B. Texanol® von der Fa. Eastman Chemicals und die Glykolether und -Ester, z. B. im Handel erhältlich von BASF SE unter den Namen Solvenon® und Lusolvan®, und von Dow unter dem Handelsnamen Dowanol®. Die Menge beträgt vorzugsweise <10 Gew.-% und besonders bevorzugt < 5 Gew.-% auf die Gesamtformulierung. Es ist auch möglich, völlig ohne Lösemittel zu formulieren.

Geeignete Verdicker sind z. B. Assoziativverdicker, wie Polyurethanverdicker. Die Menge des Verdickers beträgt in der Regel weniger als 2,5 Gew.-%, besonders bevorzugt weniger als 1,5 Gew.-% Verdicker, und speziell 0,05 bis 1 Gew.-%, bezogen auf den Feststoffgehalt des Beschichtungsmittels.

Weitere Formulierungshinweise für Holzanstriche sind ausführlich beschrieben in M. Schwartz und R. Baumstark "Water-based Acrylates for Decorative Coatings", Curt R. Vincentz Verlag, Hannover, 2001, S. 191-212 (ISBN 3-87870-726-6).

Die Herstellung der Beschichtungsmittelzusammensetzungen erfolgt in an sich bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten und anschließend erst das polymere Bindemittel, d. h. in der Regel die wässrige Dispersion des Polymeren, mit der Pigmentpaste bzw. Pigmentdispersion zu vermischen.

Die Beschichtungsmittelzusammensetzungen können in üblicher Weise auf Substrate aufgebracht werden, z. B. durch Streichen, Spritzen, Tauchen, Rollen, Rakeln.

Die wässrigen Beschichtungsmittelzusammensetzungen eignen sich vorteilhaft zur Beschichtung von Substraten, insbesondere von Holz.

Dabei erfolgt die Beschichtung der Substrate dergestalt, dass das Substrat zuerst mit einer erfindungsgemäßen wässrigen Beschichtungsformulierung beschichtet und daran anschließend die wässrige Beschichtung einem Trocknungsschritt, insbesondere im Temperaturbereich ≥ -10 und ≤ 50 °C, vorteilhaft ≥ 5 und ≤ 40 °C und insbesondere vorteilhaft ≥ 10 und ≤ 35 °C unterzogen wird.

Nachfolgende nicht einschränkende Beispiele sollen die Erfindung erläutern.

Beispiele

A. Herstellungsbeispiele:

1. Analytik

Der Feststoffgehalt wurde bestimmt, indem eine definierte Menge der wässrigen Polymerisatdispersion (ca. 2 g) in einem Aluminiumtiegel mit einem Innendurchmesser von ca. 5 cm bei 120 °C in einem Trockenschrank bis zur Gewichtskonstanz getrocknet wurde (ca. 2 Stunden). Es wurden zwei separate Messungen durchgeführt. Der im Beispiel angegebene Wert stellt den Mittelwert der beiden Messergebnisse dar.

Der mittlere Teilchendurchmesser der Polymerisatteilchen wurde durch dynamische Lichtstreuung einer mit entionisiertem Wasser auf 0,005 bis 0,01 Gew.-% verdünnten wässrigen Polymerisatdispersion bei 23 °C mittels eines High Performance Particle Sizer (HPPS) der Fa. Malvern Instruments, England, ermittelt. Angegeben wird der mittlere Durchmesser der Kumulantenauswertung (cumulant $z_{average}$) der gemessenen Autokorrelationsfunktion (ISO-Norm 13321).

Die Glasübergangstemperatur wurde nach dem DSC-Verfahren (Differential Scanning Calorimetry, 20 K/min, midpoint-Messung, DIN 53765) mittels eines DSC 822-Gerätes (Serie TA 8000) der Firma Mettler-Toledo ermittelt.

<div align="center">Einsatzmaterialien</div>

| | |
|---|---|
| Emulgatorlösung 1: | 20 gew.-%ige wässrigen Lösung von Natriumdodecylbenzylsulfonat |
| Emulgatorlösung 2: | 45 gew.-%igen wässrige Lösung eines $C_6$-$C_{16}$-Alkylsubstituierten Bis(phenylsulfonsäure)ethers (Dowfax® 2A1) |
| Emulgatorlösung 3: | Phosphorsäurehalbester eines ethoxylierten-co-propoxylierten $C_{12}$-$C_{16}$-Fettalkohols mit 14-18 EO und 4-8 PO. |
| Harnstoffmonomer: | 25 gew.-%igen Lösung von N-(2-Methacryloxyethyl)imidazolin-2-on in Methylmethacrylat |

**Vergleichsbeispiel 1 (Dispersion VD1)**

In einem mit Dosiereinrichtungen und Temperaturregelung ausgerüstetem Polymerisationsgefäß wurden bei 20 bis 25 °C (Raumtemperatur) unter Stickstoffatmosphär 459,7 g entionisiertes Wasser und 10,5 g Emulgatorlösung 1 vorgelegt und unter Rühren auf 80 °C aufgeheizt. Bei Erreichen dieser Temperatur wurden 35 g Methylmethacrylat und anschließend unter Aufrechterhaltung der Temperatur 4,0 g von Zulauf 3 zugegeben und 5 Minuten polymerisiert. Danach wurden zeitgleich beginnend Zulauf 1 innerhalb von 135 Minuten und parallel dazu die Restmenge von Zulauf 3 innerhalb von 180 Minuten mit gleichbleibenden Mengenströmen kontinuierlich zugegeben. Dabei wurde innerhalb der ersten 10 Minuten die Polymerisationstemperatur auf 87°C erhöht. Nach Beendigung von Zulauf 1 wurde sofort Zulauf 2 gestartet und innerhalb von 45 Minuten mit gleichbleibendem Mengenstrom kontinuierlich zudosiert.

<div align="center">Zulauf 1 (Emulsion aus):</div>

| | |
|---|---|
| 645,4 g | entionisiertem Wasser |
| 2,2 g | Emulgatorlösung 2 |
| 7,0 g | Emulgatorlösung 1 |
| 105,0 g | Emulgatorlösung 3 |
| 16,2 g | einer 50 gew.-%igen wässrigen Lösung von Acrylamid |
| 4,9 g | Methacrylsäure |
| 54,3 g | Harnstoffmonomer |
| 353,1 g | Methylmethacrylat und |

(fortgesetzt)

|        |                   |
|--------|-------------------|
| 664,6 g | 2-Ethylhexylacrylat |

Zulauf 2 (Emulsion aus):

|         |                       |
|---------|-----------------------|
| 155,4 g | entionisiertem Wasser |
| 63,0 g  | Emulgatorlösung 3     |
| 16,1 g  | Methacrylsäure        |
| 263,9 g | Methylmethacrylat     |

Zulauf 3 (homogene Lösung aus):

|        |                           |
|--------|---------------------------|
| 26,0 g | entionisiertem Wasser und |
| 2,0 g  | Natriumperoxodisulfat     |

Zulauf 4 (homogene Lösung aus):

|        |                           |
|--------|---------------------------|
| 23,7 g | entionisiertem Wasser und |
| 0,3 g  | Natriumperoxodisulfat     |

Nach Beendigung der Zuläufe 2 und 3 ließ man das Polymerisationsgemisch noch 15 Minuten bei 87 °C nachreagieren. Daran anschließend wurde Zulauf 4 in 15 min zudosiert, es wurde gekühlt auf 80°C und bei dieser Temperatur noch 1,25 Std nachgerührt. Dann wurde mit 8,96 g einer 25 gew.-%igen wässrigen Ammoniaklösung neutralisiert, anschließend die erhaltene wässrige Polymerisatdispersion auf Raumtemperatur abgekühlt und über 125 μm Filter filtriert.

Die erhaltenen 2917,3 g der wässrigen Polymerisatdispersion wiesen einen Feststoffgehalt von 47,6 Gew.-% und einen pH-Wert von 8,0 auf. Die mit entionisiertem Wasser verdünnte wässrige Polymerisatdispersion wies einen mittleren Teilchendurchmesser von 123 nm auf, bestimmt mittels dynamischer Lichtstreuung.

**Vergleichsbeispiel 2 (Dispersion VD2)**

Die Herstellung der Dispersion VD2 erfolgte nach der für Vergleichsbeispiel 1 angegebenen Vorschrift mit abweichender Zusammensetzung in Zulauf 1 und Zulauf 2:

Zulauf 1 (Emulsion aus):

|         |                                                |
|---------|------------------------------------------------|
| 641,2 g | entionisiertem Wasser                          |
| 2,2 g   | Emulgatorlösung 2                              |
| 14,0 g  | Emulgatorlösung 1                              |
| 84,0 g  | Emulgatorlösung 3                              |
| 16,2 g  | einer 50 gew.-%igen wässrigen Lösung von Acrylamid |
| 4,9 g   | Methacrylsäure                                 |
| 54,3 g  | Harnstoffmonomer                               |
| 353,1 g | Methylmethacrylat und                          |
| 664,6 g | 2-Ethylhexylacrylat                            |

Zulauf 2 (Emulsion aus):

|         |                       |
|---------|-----------------------|
| 155,4 g | entionisiertem Wasser |
| 84,0 g  | Emulgatorlösung 3     |
| 16,1 g  | Methacrylsäure        |
| 263,9 g | Methylmethacrylat     |

Die erhaltenen 2920 g der wässrigen Polymerisatdispersion wiesen einen Feststoffgehalt von 47,8 Gew.-% und einen pH-Wert von 8,1 auf. Die mit entionisiertem Wasser verdünnte wässrige Polymerisatdispersion wies einen mittleren Teilchendurchmesser von 125 nm auf, bestimmt mittels dynamischer Lichtstreuung.

**Vergleichsbeispiel 3 (Dispersion VD3)**

In einem mit Dosiereinrichtungen und Temperaturregelung ausgerüstetem Polymerisationsgefäß wurden bei 20 bis 25 °C (Raumtemperatur) unter Stickstoffatmosphär 470,7 g entionisiertes Wasser und 42 g Emulgatorlösung 1 vorgelegt und unter Rühren auf 87 °C aufgeheizt. Bei Erreichen dieser Temperatur wurden 56,34 g von Zulauf 1 und anschließend unter Aufrechterhaltung der Temperatur 4,0 g von Zulauf 3 zugegeben und 5 Minuten polymerisiert. Danach wurden zeitgleich beginnend die Restmengen von Zulauf 1 innerhalb von 135 Minuten und parallel dazu die Restmenge von Zulauf 3 innerhalb von 210 Minuten mit gleichbleibenden Mengenströmen kontinuierlich zugegeben. Unmittelbar nach Beendigung von Zulauf 1 wurde Zulauf 2 gestartet und innerhalb von 75 Minuten mit gleichbleibendem Mengenstrom kontinuierlich zudosiert.

Zulauf 1 (Emulsion aus):

| | |
|---|---|
| 661,1 g | entionisiertem Wasser |
| 59,5 g | Emulgatorlösung 1 |
| 16,8 g | einer 50 gew.-%igen wässrigen Lösung von Acrylamid |
| 10,5 g | Methacrylsäure |
| 56,0 g | Harnstoffmonomer |
| 359,1 g | Methylmethacrylat und |
| 686,0 g | 2-Ethylhexylacrylat |

Zulauf 2 (Emulsion aus):

| | |
|---|---|
| 184,1 g | entionisiertem Wasser |
| 13,3 g | Emulgatorlösung 1 |
| 10,5 g | Methacrylsäure |
| 269,5 g | Methylmethacrylat |

Zulauf 3 (homogene Lösung aus):

| | |
|---|---|
| 26,0 g | entionisiertem Wasser und |
| 2,0 g | Natriumperoxodisulfat |

Zulauf 4 (homogene Lösung aus):

| | |
|---|---|
| 23,7 g | entionisiertem Wasser und |
| 0,3 g | Natriumperoxodisulfat |

Nach Beendigung der Zuläufe 2 und 3 ließ man das Polymerisationsgemisch noch 15 Minuten bei 87 °C nachreagieren. Daran anschließend wurde Zulauf 4 in 20 min zudosiert, und bei dieser Temperatur noch 1,25 Std nachgerührt. Dann wurde mit 5,6 g einer 25 gew.-%igen wässrigen Ammoniaklösung neutralisiert, anschließend die erhaltene wässrige Polymerisatdispersion auf Raumtemperatur abgekühlt und über 125 μm Filter filtriert.

Die erhaltenen 2896,7 g der wässrigen Polymerisatdispersion wiesen einen Feststoffgehalt von 49,1 Gew.-% und einen pH-Wert von 7,6 auf. Die mit entionisiertem Wasser verdünnte wässrige Polymerisatdispersion wies einen mittleren Teilchendurchmesser von 97 nm auf, bestimmt mittels dynamischer Lichtstreuung.

**Beispiel 1 (Dispersion D1)**

Die Herstellung der Dispersion D1 erfolgte nach der für Vergleichsbeispiel 1 angegebenen Vorschrift mit abweichender Zusammensetzung in Zulauf 1 und Zulauf 2:

Zulauf 1 (Emulsion aus):

| | |
|---|---|
| 715,8 g | entionisiertem Wasser |
| 2,2 g | Emulgatorlösung 2 |
| 34,3 g | Emulgatorlösung 1 |
| 35,0 g | Emulgatorlösung 3 |
| 16,2 g | einer 50 gew.-%igen wässrigen Lösung von Acrylamid |
| 4,9 g | Methacrylsäure |
| 54,3 g | Harnstoffmonomer |
| 353,1 g | Methylmethacrylat und |
| 664,6 g | 2-Ethylhexylacrylat |

Zulauf 2 (Emulsion aus):

| | |
|---|---|
| 111,7 g | entionisiertem Wasser |
| 133,0 g | Emulgatorlösung 3 |
| 16,1 g | Methacrylsäure |
| 263,9 g | Methylmethacrylat |

Die erhaltenen 2974,3 g der wässrigen Polymerisatdispersion wiesen einen Feststoffgehalt von 47,5 Gew.-% und einen pH-Wert von 7,8 auf. Die mit entionisiertem Wasser verdünnte wässrige Polymerisatdispersion wies einen mittleren Teilchendurchmesser von 125 nm auf, bestimmt mittels dynamischer Lichtstreuung.

**Beispiel 2 (Dispersion D2)**

Die Herstellung der Dispersion D2 erfolgte nach der für Vergleichsbeispiel 1 angegebenen Vorschrift mit abweichender Zusammensetzung in Zulauf 1 und Zulauf 2:

Zulauf 1 (Emulsion aus):

| | |
|---|---|
| 637,7 g | entionisiertem Wasser |
| 2,2 g | Emulgatorlösung 2 |
| 21,0 g | Emulgatorlösung 1 |
| 35,0 g | Emulgatorlösung 3 |
| 59,5 g | einer 50 gew.-%igen wässrigen Lösung von Acrylamid |
| 4,9 g | Methacrylsäure |
| 54,3 g | Harnstoffmonomer |
| 353,1 g | Methylmethacrylat und |
| 664,6 g | 2-Ethylhexylacrylat |

Zulauf 2 ((Emulsion aus):

| | |
|---|---|
| 155,4 g | entionisiertem Wasser |
| 108,5 g | Emulgatorlösung 3 |
| 16,1 g | Methacrylsäure |
| 263,9 g | Methylmethacrylat |

Die erhaltenen 2922,9 g der wässrigen Polymerisatdispersion wiesen einen Feststoffgehalt von 47,8 Gew.-% und einen pH-Wert von 8,0 auf. Die mit entionisiertem Wasser verdünnte wässrige Polymerisatdispersion wies einen mittleren Teilchendurchmesser von 128 nm auf, bestimmt mittels dynamischer Lichtstreuung.

**Beispiel 3 (Dispersion D3)**

Die Herstellung der Dispersion D3 erfolgte nach der für Vergleichsbeispiel 1 angegebenen Vorschrift mit abweichender Zusammensetzung in Zulauf 1 und Zulauf 2:

Zulauf 1 (Emulsion aus):

| 641,8 g | entionisiertem Wasser |
|---|---|
| 2,2 g | Emulgatorlösung 2 |
| 14,0 g | Emulgatorlösung 1 |
| 80,5 g | Emulgatorlösung 3 |
| 16,2 g | einer 50 gew.-%igen wässrigen Lösung von Acrylamid |
| 4,9 g | Methacrylsäure |
| 54,3 g | Harnstoffmonomer |
| 353,1 g | Methylmethacrylat und |
| 664,6 g | 2-Ethylhexylacrylat |

Zulauf 2 ((Emulsion aus):

| 155,8 g | entionisiertem Wasser |
|---|---|
| 87,5 g | Emulgatorlösung 3 |
| 16,1 g | Methacrylsäure |
| 263,9 g | Methylmethacrylat |

Die erhaltenen 2921,1 g der wässrigen Polymerisatdispersion wiesen einen Feststoffgehalt von 48,0 Gew.-% und einen pH-Wert von 7,9 auf. Die mit entionisiertem Wasser verdünnte wässrige Polymerisatdispersion wies einen mittleren Teilchendurchmesser von 132 nm auf, bestimmt mittels dynamischer Lichtstreuung.

**Beispiel 4 (Dispersion D4)**

Die Herstellung der Dispersion D4 erfolgte nach der für Vergleichsbeispiel 1 angegebenen Vorschrift mit abweichender Zusammensetzung in Zulauf 1 und Zulauf 2:

Zulauf 1 (Emulsion aus):

| 637,0 g | entionisiertem Wasser |
|---|---|
| 2,2 g | Emulgatorlösung 2 |
| 30,1 g | Emulgatorlösung 1 |
| 67,2 g | Emulgatorlösung 3 |
| 16,2 g | einer 50 gew.-%igen wässrigen Lösung von Acrylamid |
| 4,9 g | Methacrylsäure |
| 54,3 g | Harnstoffmonomer |
| 353,1 g | Methylmethacrylat und |
| 664,6 g | 2-Ethylhexylacrylat |

Zulauf 2 (Emulsion aus):

| 155,4 g | entionisiertem Wasser |
|---|---|
| 67,9 g | Emulgatorlösung 3 |
| 16,1 g | Methacrylsäure |
| 263,9 g | Methylmethacrylat |

Die erhaltenen 2899,1 g der wässrigen Polymerisatdispersion wiesen einen Feststoffgehalt von 47,9 Gew.-% und einen pH-Wert von 8,2 auf. Die mit entionisiertem Wasser verdünnte wässrige Polymerisatdispersion wies einen mittleren Teilchendurchmesser von 126 nm auf, bestimmt mittels dynamischer Lichtstreuung.

Anwendungstechnische Prüfung:

Herstellung einer Beschichtungszusammensetzung:

Die wässrigen Polymerisatdispersionen wurden mit entionisiertem Wasser auf einen Feststoffgehalt von 45 Gew.-% verdünnt. Je 628 g dieser verdünnten wässrigen Polymerisatdispersionen wurden bei Raumtemperatur zu einer Farbformulierung mit der im Folgenden angegebenen Zusammensetzung durch homogenisieren der Bestandteile hergestellt:

| | |
|---|---|
| 60,0 g | entionisiertes Wasser |
| 2,0 g | Silikontensid[1] |
| 0,6 g | Verdicker 1 [2] |
| 1,5 g | wässriger 25 gew.-%iger Ammoniak |
| 4,0 g | Entschäumer 1 [3] |
| 10,0 g | Dispergiermittel 1 [4] |
| 1,0 g | Verdicker 2 [5] |
| 10,0 g | Filmbildehilfsmittel 1 [6] |
| 10,0 g | Filmbildehilfsmittel 2 [7] |
| 232,0 g | Titandioxid-Pigment [8] |
| 35,0 g | Calciumcarbonat-Füllstoff [9] |
| 628,0 g | Polymerdispersion |
| 3,0 g | Entschäumer 4 [10] |
| X g | Verdicker 3 [11] [12] |
| Y g | entionisiertes Wasser 3 [13] |

1) Byk 348 (Netzmittel der Fa. Byk-Chemie GmbH)
2) Hydrophob modifiziertes Acrylat-Polymer (Rheovis® HS 1169 der BASF SE)
3) Byk 020 (Polysiloxan der Fa. Byk-Chemie GmbH)
4) Natriumsalz einer Polyacrylsäure (Dispex® CX 4320 der BASF SE)
5) Polyurethan-Verdicker (Rheovis® PU 1270 der BASF SE)
6) Texanol®
7) Butyldiglykol
8) Kronos 2190 der Fa. Kronos Inc.
9) Omyacarb 5-GU (Fa. Omya GmbH)
10) Tego Foamex 825 (Alklypolysiloxan der Fa. Evonik Industries AG)
11) Polyurethan-Verdicker (Rheovis® PU 1331 der BASF SE)
12) X = 1,4 g für Dispersion VD3, für alle übrigen Dispersionen 2,7 g
13) Y = 1,5 g für Dispersion VD3, für alle übrigen Dispersionen 0,2 g

Es wurden die folgenden Untersuchungen durchgeführt:

• Verlaufstörungen des Polymerfilms: Hierzu wurde die wäsrige Polymerdispersion als Film mit einer Nassschichtdicke von 100 $\mu$m auf Glas aufgezogen. Die Reflektion einer Lichtquelle im nassen Film wurde mit Hilfe von Schulnoten qualitativ bewertet
0 = sehr gut, ohne Störungen, 5 = sehr matt, starke Störungen.
• Verdickbarkeit: Es wurde die Menge an Verdicker ermittelt, die zur Erreichung der gewünschten Viskosität (etwa 100 bis 115 KU) notwendig war. Die Bestimmung der Viskosität erfolgte mittels eines Brookfield KU-1 Messgeräts bei 20°C.
• Farbtonstabilität: Die Bestimmung der Farbtonstabilität erfolgte mittels Rub-Out-Test der oben genannten Formulierung, die jeweils mit einer roten oder einer blauen Pigmentpaste abgetönt war.

a) Rote Pigmentpaste: Avatint RX ( rot ) der Fa. Tikkurila - Zugabe von 4 Gew.-% Pigmentpaste zu Farbformulierung

b) Blaue Pigmentpaste: Luconyl Blau 6900 der Fa. BASF SE- Zugabe von 6 Gew.-% Pigmentpaste zu Farbformulierung

Prüfgerät: Erichsen-Filmaufziehgerät 300 μm
Prüfmittel: Kontrastkarton / Rückseite 28 cm * 8 cm
Durchführung: Die zu prüfende Farbe wird mit dem Erichsen-Filmaufziehgerät auf die Kontrastkartonrückseite mi einer Nassschichtdicke von 300 μm aufgezogen. Danach wird der Aufzug mit dem "Finger" solange kreisförmig verrieben, bis die Farbe merklich anzieht. Dann wird in der Mitte des Kreises als Kontrast ein frischer unverriebener Farbpunkt gesetzt.

Auswertung: Visuelle Beurteilung als Rangfolge 0 = Keine Farbveränderung bis 6 = Starke Farbveränderung. Außerdem wurde mittels eines Photospektrometers (Minolta Spectrometer CM-508i) der Δ E-Wert als ein Maß für die jeweilige Farbabweichung bestimmt. Hierzu wurden die sogenannten L-, a- und b-Werte des verriebenen Bereichs und des Konstrastpunkts an mehreren Stellen gemessen und anschließend der jeweilige Mittelwert gebildet. Daran anschließend wurden die Unterschiede der gemittelten L-, a- und b-Werte ermittelt (Δ L, Δ a und Δ b). Der Δ E-Wert berechnet sich nach der folgenden Formel:

$$\Delta E = \sqrt{(\Delta L)^2 + (\Delta a)^2 + (\Delta b)^2}$$

Die Ergebnisse sind in den folgenden Tabellen 1 und 2 zusammengefasst:

Tabelle 1: Verlaufsstörung und Verdickung

| Dispersion | Verlaufstörung | Verdickermenge | Viskosität |
|---|---|---|---|
|  | Schulnote | [ppm] | KU |
| D1 | 1 | 2,7 | 101 |
| D2 | 2 | 2,7 | 103 |
| D3 | 1 - 2 | 2,7 | 105 |
| D4 | 1 - 2 | 2,7 | 103 |
| VD1 | 5 | 2,7 | 108 |
| VD2 | 4 | 2,7 | 106 |
| VD3 | 4 | 1,4 | 111 |

Tabelle 2: (Farbtonstabilität)

|  | Rote Tönung | | Blaue Tönung | |
|---|---|---|---|---|
|  | Qualitativ | ΔE (%) | Qualitativ | ΔE (%) |
| D1 | 1 | 1,10 | 0 - 1 | 0,93 |
| D2 | 1 - 2 | 1,14 | 0 - 1 | 0,59 |
| D3 | 1 | 1,03 | 2 | 1,16 |
| D4 | 1 - 2 | 1,13 | 0 - 1 | 0,95 |
| VD1 | 0 - 1 | 0,79 | 0 - 1 | 0,97 |
| VD2 | 1 | 1,00 | 1 | 1,06 |
| VD3 | 3 | 2,32 | 3 | 2,39 |

**Patentansprüche**

1. Verfahren zur Herstellung einer wässrigen Polymerdispersion durch radikalisch initiierte wässrige Emulsionspolymerisation von ethylenisch ungesättigten Monomeren in Anwesenheit wenigstens eines Dispergiermittels und wenigstens eines Polymerisationsinitiators, umfassend die folgenden Schritte:

i) Bereitstellung einer wässrigen Polymerdispersion S, die im Wesentlichen aus gering wasserlöslichen, neutralen monoethylenisch ungesättigten Monomeren M0 mit einer Wasserlöslichkeit von weniger als 100 g/l bei 20°C und 1 bar aufgebaut ist;

ii) radikalische Emulsionspolymerisation einer Monomerzusammensetzung M1 in Gegenwart einer Dispergiermittelzusammensetzung D1 und der wässrigen Polymerdispersion S, wobei die Monomerzusammensetzung M1 umfasst:

• 90 bis 99,9 Gew.-%, bezogen auf die Gesamtmenge an Monomeren der Monomerzusammensetzung M1, wenigstens eines neutralen monoethylenisch ungesättigten Monomers MA1 mit einer Wasserlöslichkeit von weniger als 100 g/l bei 20°C und 1 bar; und

• 0,1 bis10 Gew.-%, bezogen auf die Gesamtmenge an Monomeren der Monomerzusammensetzung M1, wenigstens eines anionischen oder neutralen monoethylenisch ungesättigten Monomers MB1 mit einer Wasserlöslichkeit von wenigstens 200 g/l bei 20°C und 1 bar;

und anschließende

iii) radikalische Emulsionspolymerisation einer Monomerzusammensetzung M2 in Gegenwart einer Dispergiermittelzusammensetzung D2 in der in Schritt ii) erhaltenen wässrigen Polymeridspersion, wobei die Monomerzusammensetzung M2 umfasst:

• 90 bis 99,9 Gew.-%, bezogen auf die Gesamtmenge an Monomeren der Monomerzusammensetzung M2, wenigstens eines neutralen monoethylenisch ungesättigten Monomers MA2 mit einer Wasserlöslichkeit von weniger als 100 g/l bei 20°C und 1 bar; und

• 0,1 bis10 Gew.-%, bezogen auf die Gesamtmenge an Monomeren der Monomerzusammensetzung M2, wenigstens eines anionischen oder neutralen monoethylenisch ungesättigten Monomers MB2 mit einer Wasserlöslichkeit von wenigstens 200 g/l bei 20°C und 1 bar;

wobei die Dispergiermittelzusammensetzung D1 wenigstens ein erstes anionisches Dispergiermittel D1a, das wenigstens eine Sulfat- oder Sulfonatgruppe aufweist, und gegebenenfalls wenigstens ein zweites Dispergiermittel D1b umfasst, das wenigstens eine Phosphat- oder Phosphonatgruppe aufweist;

wobei die Dispergiermittelzusammensetzung D2 wenigstens ein Dispergiermittel D2b umfasst, das wenigstens eine Phosphat- oder Phosphonatgruppe aufweist,

wobei das Gewichtsverhältnis der in Stufe 1 eingesetzten Menge an Dispergiermittel D1b zu der in Stufe 2 eingesetzten Menge des Dispergiermittels D2b kleiner als 1 ist.

2. Verfahren nach Anspruch 1, wobei das Gewichtsverhältnis der in Stufe 1 eingesetzten Menge an Dispergiermittel D1b zu der in Stufe 2 eingesetzten Menge des Dispergiermittels D2b im Bereich von 1 : 1,01 bis 1 : 5,00, insbesondere im Bereich von 1 : 1,05 bis 1 : 4,00 liegt.

3. Verfahren nach einem der vorhergehenden Ansprüche, wobei das Gewichtsverhältnis (1) von Dispergiermitteln der Dispergiermittelzusammensetzung D1 zu den Monomeren der Monomerzusammensetzung M1 kleiner ist als das Gewichtsverhältnis (2) von Dispergiermitteln in der Dispergiermittelzusammensetzung D2 zu den Monomeren der Monomerzusammensetzung M2.

4. Verfahren nach Anspruch 3, wobei der Quotient von Gewichtsverhältnis (1) zu Gewichtsverhältnis (2) im Bereich von 1 : 1,5 bis 1 : 10 liegt.

5. Verfahren nach einem der vorhergehenden Ansprüche, wobei die Dispergiermittelmenge in der Dispergiermittelzusammensetzung D1 im Bereich von 0,5 bis 3 Gew.-%, bezogen auf die Monomere in der Monomerzusammensetzung M1 und die Dispergiermittelmenge in der Dispergiermittelzusammensetzung D2 im Bereich von 3,5 bis 10 Gew.-%, bezogen auf die Monomere in der Monomerzusammensetzung M2 liegt.

6. Verfahren nach einem der vorhergehenden Ansprüche, wobei der Gewichtsanteil an Monomeren der Monomerzusammensetzung M1, bezogen auf die Gesamtmasse der Monomeren M0 und der Monomeren der Monomerzusammensetzungen M1 und M2 im Bereich von 60 bis 95 Gew.-%, insbesondere im Bereich von 70 bis 90 Gew.-% liegt.

7. Verfahren nach einem der vorhergehenden Ansprüche, wobei der Gewichtsanteil an Monomeren M0, bezogen auf die Gesamtmasse der Monomeren M0 und der Monomeren der Monomerzusammensetzungen M1 und M2 im Bereich von 0,1 bis 10 Gew.-%, insbesondere im Bereich von 0,5 bis 5 Gew.-% liegt.

8. Verfahren nach einem der vorhergehenden Ansprüche, wobei man in Schritt i) die Polymerdispersion S durch radikalisch initiierte wässrige Emulsionspolymerisation der ethylenisch ungesättigten Monomere M0 in Anwesenheit wenigstens eines Dispergiermittels und wenigstens eines Polymerisationsinitiators herstellt und anschließend die Schritte ii) und iii) in der so hergestellten Polymerdispersion S durchführt.

9. Verfahren nach einem der vorhergehenden Ansprüche, wobei der Gewichtsanteil der Monomere MB1, bezogen auf die Gesamtmenge der Monomere der Monomerzusammensetzung M1, im Bereich von 0,1 bis 3 Gew.-% liegt und der Gewichtsanteil der Monomere MB2, bezogen auf die Gesamtmenge der Monomere der Monomerzusammensetzung M2, im Bereich von 2 bis 10 Gew.-% liegt.

10. Verfahren nach einem der vorhergehenden Ansprüche, wobei die Monomerzusammensetzung M1 einer theoretischen Glasübergangstemperatur $T_g(1)$ nach Fox von maximal 30°C, insbesondere im Bereich von -20 bis +20°C entspricht und die Monomerzusammensetzung M2 einer theoretischen Glasübergangstemperatur $T_g(2)$ nach Fox von mindestens 50°C und insbesondere im Bereich von 70 bis 120°C entspricht.

11. Verfahren nach einem der vorhergehenden Ansprüche, wobei das Dispergiermittel, das wenigstens eine Phosphat- oder Phosphonatgruppe aufweist, ausgewählt ist unter den Salzen, insbesondere den Alkalimetallsalzen, von Phosphorsäurehalbestern ethoxylierter Alkanole, von Phosphorsäurehalbestern ethoxylierter-co-propoxylierter Alkanole und von Phosphorsäurehalbestern ethoxylierter Alkylphenole.

12. Verfahren nach einem der vorhergehenden Ansprüche, wobei das Dispergiermittel, das wenigstens eine Sulfat- oder Sulfonatgruppe aufweist, ausgewählt ist unter den Salzen, insbesondere den Alkalimetallsalzen, von Alkylbenzolsulfonaten, von Schwefelsäurehalbestern ethoxylierter Alkanole, Schwefelsäurehalbestern ethoxylierter Alkylphenole und von ein oder zweifach sulfonierten, alkylsubstituierten Diphenylethern.

13. Verfahren nach einem der vorhergehenden Ansprüche, wobei die Monomere MA1 und MA2 ausgewählt sind unter Estern und Diestern monoethylenisch ungesättigter $C_3$-$C_8$-Mono- und $C_4$-$C_8$-Dicarbonsäuren mit $C_1$-$C_{30}$-Alkanolen, Estern von Vinyl- oder Allylalkohol mit gesättigten $C_1$-$C_{30}$-Monocarbonsäuren und vinylaromatische Kohlenwasserstoffe und Mischungen davon.

14. Verfahren nach einem der vorhergehenden Ansprüche, wobei die Monomere MB1 und MB2 ausgewählt ist unter monoethylenisch ungesättigten $C_3$-$C_8$-Monocarbonsäuren, monoethylenisch ungesättigten $C_4$-$C_8$-Dicarbonsäuren, primären Amiden monoethylenisch ungesättigter $C_3$-$C_8$-Monocarbonsäuren, Hydroxy-$C_2$-$C_4$-alkylestern monoethylenisch ungesättigter $C_3$-$C_8$-Monocarbonsäuren, Ketogruppen aufweisenden monoethylenisch ungesättigten Monomeren, monoethylenisch ungesättigten Monomeren, die eine Phosphat- oder Phosphonatgruppe aufweisen, und Harnstoffgruppen aufweisenden monoethylenisch ungesättigten Monomeren und Mischungen davon.

15. Wässrige Polymerdispersion, erhältlich durch ein Verfahren nach einem der vorhergehenden Ansprüche, deren Polymerteilchen wenigstens 3 Polymerphasen P0, P1 und P2 umfassen, wobei die Polymerphase P0 aus den Monomeren M0, die Polymerphase P1 aus den Monomeren der Monomerzusammensetzung M1 und die Polymerphase P2 aus den Monomeren der Monomerzusammenetzung M2 aufgebaut ist.

16. Wässrige Polymerdispersion nach Anspruch 15, die wenigstens eines der folgenden Merkmale aufweisen:

   - die Polymerphase P1 weist eine Glasübergangstemperatur $T_g1$ von unterhalb 30°C und die Polymerphase P2 eine Glasübergangstemperatur $T_g2$ von wenigstens 50°C auf, bestimmt mittels dynamischer Differenzkalorimetrie nach der midpoint-Methode nach DIN 53765:1994-03;
   - die Polymerteilchen weisen einen mittleren Teilchendurchmesser, bestimmt mittels quasielastischer Lichtstreuung, im Bereich von 50 bis 200 nm

17. Polymerpulver, erhältlich durch Trocknung einer wässrigen Polymerdispersion nach einem der Ansprüche 15 oder 16.

18. Verwendung einer wässrigen Polymerdispersion gemäß einem der Ansprüche 15 oder 16 oder eines Polymerpulvers gemäß Anspruch 17 zur Herstellung von Klebstoffen, Dichtmassen, Kunststoffputzen, Papierstreichmassen, Faservliesen, Anstrichmitteln und Beschichtungsmitteln für organische Substrate sowie zur Modifizierung von mineralischen Bindemitteln, insbesondere zur Herstellung von Beschichtungsmitteln für Holz.

**Claims**

1. A process for producing an aqueous polymer dispersion by free-radically initiated aqueous emulsion polymerization of ethylenically unsaturated monomers in the presence of at least one dispersant and at least one polymerization initiator, comprising the following steps:

   i)provision of an aqueous polymer dispersion S formed essentially from uncharged, monoethylenically unsaturated monomers M0 having a low water solubility of less than 100 g/l at 20°C and 1 bar;
   ii) free-radical emulsion polymerization of a monomer composition M1 in the presence of a dispersant composition D1 and the aqueous polymer dispersion S, said monomer composition M1 comprising:

   • 90% to 99.9% by weight, based on the total amount of monomers in the monomer composition M1, of at least one uncharged monoethylenically unsaturated monomer MA1 having a water solubility of less than 100 g/L at 20°C and 1 bar; and
   • 0.1% to 10% by weight, based on the total amount of monomers in the monomer composition M1, of at least one anionic or uncharged monoethylenically unsaturated monomer MB1 having a water solubility of at least 200 g/L at 20°C and 1 bar;

   and then
   iii) free-radical emulsion polymerization of a monomer composition M2 in the presence of a dispersant composition D2 in the aqueous polymer dispersion obtained in step ii), said monomer composition M2 comprising:

   • 90% to 99.9% by weight, based on the total amount of monomers in the monomer composition M2, of at least one uncharged monoethylenically unsaturated monomer MA2 having a water solubility of less than 100 g/L at 20°C and 1 bar; and
   • 0.1% to 10% by weight, based on the total amount of monomers in the monomer composition M2, of at least one anionic or uncharged monoethylenically unsaturated monomer MB2 having a water solubility of at least 200 g/L at 20°C and 1 bar;

   wherein the dispersant composition D1 comprises at least one first anionic dispersant D1a having at least one sulfate or sulfonate group, and optionally at least one second dispersant D1b having at least one phosphate or phosphonate group;
   wherein the dispersant composition D2 comprises at least one dispersant D2b having at least one phosphate or phosphonate group;
   wherein the weight ratio of the amount of dispersant D1b used in stage 1 to the amount of dispersant D2b used in stage 2 is less than 1.

2. The process according to claim 1, wherein the weight ratio of the amount of dispersant D1b used in stage 1 to the amount of dispersant D2b used in stage 2 is in the range from 1:1.01 to 1:5.00, especially in the range from 1:1.05 to 1:4.00.

3. The process according to either of the preceding claims, wherein the weight ratio (1) of dispersants in dispersant composition D1 to the monomers in monomer composition M1 is less than the weight ratio (2) of dispersants in the dispersant composition D2 to the monomers in monomer composition M2.

4. The process according to claim 3, wherein the quotient of weight ratio (1) to weight ratio (2) is in the range from 1:1.5 to 1:10.

5. The process according to any of the preceding claims, wherein the amount of dispersant in the dispersant composition D1 is in the range from 0.5% to 3% by weight, based on the monomers in the monomer composition M1, and the amount of dispersant in the dispersant composition D2 is in the range from 3.5% to 10% by weight, based on the monomers in the monomer composition M2.

6. The process according to any of the preceding claims, wherein the proportion by weight of monomers in monomer composition M1, based on the total mass of monomers M0 and the monomers in monomer compositions M1 and M2, is in the range from 60% to 95% by weight, especially in the range from 70% to 90% by weight.

7. The process according to any of the preceding claims, wherein the proportion by weight of monomers M0, based on the total mass of monomers M0 and the monomers in monomer compositions M1 and M2, is in the range from 0.1% to 10% by weight, especially in the range from 0.5% to 5% by weight.

8. The process according to any of the preceding claims, wherein the polymer dispersion S is produced in step i) by free-radically initiated aqueous emulsion polymerization of ethylenically unsaturated monomers M0 in the presence of at least one dispersant and of at least one polymerization initiator, and then steps ii) and iii) are conducted in the polymer dispersion S thus produced.

9. The process according to any of the preceding claims, wherein the proportion by weight of the monomers MB1, based on the total amount of the monomers in monomer composition M1, is in the range from 0.1% to 3% by weight, and the proportion by weight of the monomers MB2, based on the total amount of the monomers in monomer composition M2, is in the range from 2% to 10% by weight.

10. The process according to any of the preceding claims, wherein the monomer composition M1 corresponds to a theoretical glass transition temperature $T_g(1)$ according to Fox of not more than 30°C, especially in the range from -20°C to +20°C, and the monomer composition M2 to a theoretical glass transition temperature $T_g(2)$ according to Fox of at least 50°C and especially in the range from 70 to 120°C.

11. The process according to any of the preceding claims, wherein the dispersant having at least one phosphate or phosphonate group is selected from the salts, especially the alkali metal salts, of phosphoric monoesters of ethoxylated alkanols, of phosphoric monoesters of ethoxylated-co-propoxylated alcohols and of phosphoric monoesters of ethoxylated alkylphenols.

12. The process according to any of the preceding claims, wherein the dispersant having at least one sulfate or sulfonate group is selected from salts, especially the alkali metal salts, of alkylbenzenesulfonates, of sulfuric monoesters of ethoxylated alkanols, of sulfuric monoesters of ethoxylated alkylphenols and of mono- and disulfonated, alkyl-substituted diphenyl ethers.

13. The process according to any of the preceding claims, wherein the monomers MA1 and MA2 are selected from esters and diesters of monoethylenically unsaturated $C_3$-$C_8$ monocarboxylic acids and $C_4$-$C_8$ dicarboxylic acids with $C_1$-$C_{30}$-alkanols, esters of vinyl or allyl alcohol with saturated $C_1$-$C_{30}$ monocarboxylic acids and vinylaromatic hydrocarbons and mixtures thereof.

14. The process according to any of the preceding claims, wherein the monomers MB1 and MB2 are selected from monoethylenically unsaturated $C_3$-$C_8$ monocarboxylic acids, monoethylenically unsaturated $C_4$-$C_8$ dicarboxylic acids, primary amides of monoethylenically unsaturated $C_3$-$C_8$ monocarboxylic acids, hydroxy-$C_2$-$C_4$-alkyl esters of monoethylenically unsaturated $C_3$-$C_8$ monocarboxylic acids, monoethylenically unsaturated monomers having keto groups, monoethylenically unsaturated monomers having a phosphate or phosphonate group, and monoethylenically unsaturated monomers having urea groups, and mixtures thereof.

15. An aqueous polymer dispersion obtainable by the process according to any of the preceding claims, having polymer particles comprising at least 3 polymer phases P0, P1 and P2, wherein the polymer phase P0 is formed from the monomers M0, the polymer phase P1 from monomers of the monomer composition M1 and a polymer phase P2 from the monomers of the monomer composition M2.

16. The aqueous polymer dispersion according to claim 15, having at least one of the following features:

- the polymer phase P1 has a glass transition temperature $T_g1$ of less than 30°C and the polymer phase P2 a glass transition temperature $T_g2$ of at least 50°C, determined by means of dynamic differential calorimetry by the midpoint method to DIN 53765:1994-03;
- the polymer particles have a median particle diameter, determined by means of quasielastic light scattering, in the range from 50 to 200 nm.

17. A polymer powder obtainable by drying an aqueous polymer dispersion according to either of claims 15 and 16.

**18.** The use of an aqueous polymer dispersion according to either of claims 15 and 16 or of a polymer powder according to claim 17 for production of adhesives, sealants, synthetic renders, papercoating slips, fiber webs, paints and coatings for organic substrates, and for modification of mineral binders, especially for production of coating compositions for wood.

**Revendications**

**1.** Procédé de fabrication d'une dispersion aqueuse de polymères par polymérisation en émulsion aqueuse initiée radicalairement de monomères éthyléniquement insaturés en présence d'au moins un dispersant et d'au moins un initiateur de polymérisation, comprenant les étapes suivantes :

i) la préparation d'une dispersion aqueuse de polymères S, qui est essentiellement constituée de monomères monoéthyléniquement insaturés neutres peu solubles dans l'eau M0 ayant une solubilité dans l'eau inférieure à 100 g/l à 20 °C et 1 bar ;
ii) la polymérisation en émulsion radicalaire d'une composition de monomères M1 en présence d'une composition de dispersant D1 et de la dispersion aqueuse de polymères S, la composition de monomères M1 comprenant :

- 90 à 99,9 % en poids, par rapport à la quantité totale de monomères de la composition de monomères M1, d'au moins un monomère monoéthyléniquement insaturé neutre MA1 ayant une solubilité dans l'eau inférieure à 100 g/l à 20 °C et 1 bar ; et
- 0,1 à 10 % en poids, par rapport à la quantité totale de monomères de la composition de monomères M1, d'au moins un monomère monoéthyléniquement insaturé anionique ou neutre MB1 ayant une solubilité dans l'eau d'au moins 200 g/l à 20 °C et 1 bar ;

puis

iii) la polymérisation en émulsion radicalaire d'une composition de monomères M2 en présence d'une composition de dispersant D2 dans la dispersion aqueuse de polymères obtenue à l'étape ii), la composition de monomères M2 comprenant :

- 90 à 99,9 % en poids, par rapport à la quantité totale de monomères de la composition de monomères M2, d'au moins un monomère monoéthyléniquement insaturé neutre MA2 ayant une solubilité dans l'eau inférieure à 100 g/l à 20 °C et 1 bar ; et
- 0,1 à 10 % en poids, par rapport à la quantité totale de monomères de la composition de monomères M2, d'au moins un monomère monoéthyléniquement insaturé anionique ou neutre MB2 ayant une solubilité dans l'eau d'au moins 200 g/l à 20 °C et 1 bar ;

la composition de dispersant D1 comprenant au moins un premier dispersant anionique D1a, qui comprend au moins un groupe sulfate ou sulfonate, et éventuellement au moins un deuxième dispersant D1b, qui comprend au moins un groupe phosphate ou phosphonate ;
la composition de dispersant D2 comprenant au moins un dispersant anionique D2b, qui comprend au moins un groupe phosphate ou phosphonate,
le rapport en poids entre la quantité de dispersant D1b utilisée à l'étape 1 et de la quantité de dispersant D2b utilisée à l'étape 2 étant inférieur à 1.

**2.** Procédé selon la revendication 1, dans lequel le rapport en poids entre la quantité de dispersant D1b utilisée à l'étape 1 et de la quantité de dispersant D2b utilisée à l'étape 2 se situe dans la plage allant de 1:1,01 à 1:5,00, notamment dans la plage allant de 1:1,05 à 1:4,00.

**3.** Procédé selon l'une quelconque des revendications précédentes, dans lequel le rapport en poids (1) entre les dispersants de la composition de dispersant D1 et les monomères de la composition de monomères M1 est inférieur au rapport en poids (2) entre les dispersants de la composition de dispersant D2 et les monomères de la composition de monomères M2.

**4.** Procédé selon la revendication 3, dans lequel le quotient du rapport en poids (1) et du rapport en poids (2) se situe dans la plage allant de 1:1,5 à 1:10.

**5.** Procédé selon l'une quelconque des revendications précédentes, dans lequel la quantité de dispersant dans la composition de dispersant D1 se situe dans la plage allant de 0,5 à 3 % en poids, par rapport aux monomères dans la composition de monomères M1, et la quantité de dispersant dans la composition de dispersant D2 se situe dans la plage allant de 3,5 à 10 % en poids, par rapport aux monomères dans la composition de monomères M2.

6. Procédé selon l'une quelconque des revendications précédentes, dans lequel la proportion en poids de monomères dans la composition de monomères M1, par rapport à la masse totale des monomères M0 et des monomères des compositions de monomères M1 et M2, se site dans la plage allant de 60 à 95 % en poids, notamment dans la plage allant de 70 à 90 % en poids.

7. Procédé selon l'une quelconque des revendications précédentes, dans lequel la proportion en poids de monomères M0, par rapport à la masse totale des monomères M0 et des monomères des compositions de monomères M1 et M2, se site dans la plage allant de 0,1 à 10 % en poids, notamment dans la plage allant de 0,5 à 5 % en poids.

8. Procédé selon l'une quelconque des revendications précédentes, dans lequel, à l'étape i), la dispersion de polymères S est fabriquée par polymérisation en émulsion aqueuse initiée radicalairement des monomères éthyléniquement insaturés M0 en présence d'au moins un dispersant et d'au moins un initiateur de polymérisation, puis les étapes ii) et iii) sont réalisées dans la dispersion de polymères S ainsi fabriquée.

9. Procédé selon l'une quelconque des revendications précédentes, dans lequel la proportion en poids des monomères MB1, par rapport à la quantité totale des monomères de la composition de monomère M1, se situe dans la plage allant de 0,1 à 3 % en poids, et la proportion en poids des monomères MB2, par rapport à la quantité totale des monomères de la composition de monomère M2, se situe dans la plage allant de 2 à 10 % en poids.

10. Procédé selon l'une quelconque des revendications précédentes, dans lequel la composition de monomères M1 correspond à une température de transition vitreuse théorique $T_g(1)$ selon Fox d'au plus 30 °C, notamment dans la plage allant de -20 à +20 °C, et la composition de monomères M2 correspond à une température de transition vitreuse théorique $T_g(2)$ selon Fox d'au moins 50 °C, et notamment dans la plage allant de 70 à 120 °C.

11. Procédé selon l'une quelconque des revendications précédentes, dans lequel le dispersant qui comprend au moins un groupe phosphate ou phosphonate est choisi parmi les sels, notamment les sels de métaux alcalins, de semi-esters de l'acide phosphorique d'alcanols éthoxylés, de semi-esters de l'acide phosphorique d'alcanols éthoxylés-co-propoxylés et de semi-esters de l'acide phosphorique d'alkylphénols éthoxylés.

12. Procédé selon l'une quelconque des revendications précédentes, dans lequel le dispersant qui comprend au moins un groupe sulfate ou sulfonate est choisi parmi les sels, notamment les sels de métaux alcalins, de sulfonates d'alkylbenzène, de semi-esters de l'acide sulfurique d'alcanols éthoxylés, de semi-esters de l'acide sulfurique d'alkylphénols éthoxylés et d'éthers diphényliques à substitution alkyle sulfonés une ou deux fois.

13. Procédé selon l'une quelconque des revendications précédentes, dans lequel les monomères MA1 et MA2 sont choisis parmi les esters et les diesters d'acides monocarboxyliques en $C_3$-$C_8$ et dicarboxyliques en $C_4$-$C_8$ monoéthyléniquement insaturés avec des alcanols en $C_1$-$C_{30}$, les esters d'alcool vinylique ou allylique avec des acides monocarboxyliques en $C_1$-$C_{30}$ saturés et les hydrocarbures vinylaromatiques et leurs mélanges.

14. Procédé selon l'une quelconque des revendications précédentes, dans lequel les monomères MB1 et MB2 sont choisis parmi les acides monocarboxyliques en $C_3$-$C_8$ monoéthyléniquement insaturés, les acides dicarboxyliques en $C_4$-$C_8$ monoéthyléniquement insaturés, les amides primaires d'acides monocarboxyliques en $C_3$-$C_8$ monoéthyléniquement insaturés, les esters hydroxyalkyliques en $C_2$-$C_4$ d'acides monocarboxyliques en $C_3$-$C_8$ monoéthyléniquement insaturés, les monomères monoéthyléniquement insaturés comprenant des groupes céto, les monomères monoéthyléniquement insaturés qui comprennent un groupe phosphate ou phosphonate, et les monomères monoéthyléniquement insaturés comprenant des groupes urée, et leurs mélanges.

15. Dispersion aqueuse de polymères, pouvant être obtenue par un procédé selon l'un quelconque des revendications précédentes, dont les particules polymères comprennent au moins 3 phases polymères P0, P1 et P2, la phase polymère P0 étant constituée des monomères M0, la phase polymère P1 des monomères de la composition de monomères M1 et la phase polymère P2 des monomères de la composition de monomères M2.

16. Dispersion aqueuse de polymères selon la revendication 15, qui présente au moins une des caractéristiques suivantes :

- la phase polymère P1 présente une température de transition vitreuse $T_g1$ inférieure à 30 °C et la phase polymère P2 une température de transition vitreuse Tg2 d'au moins 50 °C, déterminées par calorimétrie différentielle dynamique selon la méthode du point milieu selon DIN 53765:1994-03 ;
- les particules polymères présentent un diamètre de particule moyen, déterminé par diffusion de lumière quasi-élastique, dans la plage allant de 50 à 200 nm.

**17.** Poudre polymère, pouvant être obtenue par séchage d'une dispersion aqueuse de polymères selon l'une quelconque des revendications 15 ou 16.

**18.** Utilisation d'une dispersion aqueuse de polymères selon l'une quelconque des revendications 15 ou 16 ou d'une poudre polymère selon la revendication 17 pour la fabrication d'adhésifs, de matériaux d'étanchéité, d'enduits synthétiques, de sauces de couchage pour papier, de non-tissés de fibres, de peintures et d'agents de revêtement pour des substrats organiques, ainsi que pour la modification de liants minéraux, notamment pour la fabrication d'agents de revêtement pour le bois.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 184091 A
- EP 623659 A1
- EP 710680 A1
- EP 795568 A2
- WO 2008152017 A
- WO 2009095569 A
- US 4269749 A
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A

**In der Beschreibung aufgeführte Nicht-Patentliteratur**

- **T. G. FOX.** *Bull. Am. Phys. Soc.,* 1956, vol. 1, 123
- Chemie. Verlag Chemie, 1980, vol. 19, 18
- Ullmann's Encyclopedia of Industrial Chemistry. Verlag Chemie, 1992, vol. A21, 169
- **B. J. BRANDRUP ; E. H. IMMERGUT.** Polymer Handbook. J. Wiley, 1966
- **B. J. BRANDRUP, E. H. IMMERGUT.** POLYMER HANDBOOK. J. Wiley
- **B. J. BRANDRUP, E. H. IMMERGUT.** POLYMER HANDBOOK. J. Wiley, 1989
- Analysis of Polymer Dispersions with an Eight-Cell-AUC-Multiplexer: High Resolution Particle Size Distribution and Density Gradient Techniques. **S.E. HARDING et al.** Analytical Ultracentrifugation in Biochemistry and Polymer Science. Royal Society of Chemistry, 1992, 147-175
- Emulgatoren finden sich in Houben-Weyl, Methoden der organischen Chemie. Makromolekulare Stoffe. Georg-Thieme-Verlag, 1961, vol. XIV/1, 192-208
- Emulsionspolymerisation. Encyclopedia of Polymer Science and Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **J. BRANDRUP ; E.H. IMMERGUT.** Polymerhandbook. John Wiley & Sons, 1989, 133-141
- **M. SCHWARTZ ; R. BAUMSTARK.** Water-based Acrylates for Decorative Coatings. Curt R. Vincentz Verlag, 2001, 191-212